(19) **Europäisches Patentamt**

**European Patent Office**

**Office européen des brevets**

(11) **EP 1 686 406 A2**

(12) **EUROPEAN PATENT APPLICATION**

(43) Date of publication:
**02.08.2006 Bulletin 2006/31**

(51) Int Cl.:
***G02B 21/00*** *(2006.01)*

(21) Application number: **06000304.3**

(22) Date of filing: **09.01.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **27.01.2005 JP 2005020044**

(71) Applicant: **Olympus Corporation
Tokyo 151-0072 (JP)**

(72) Inventor: **Kawanabe, Hideyuki
Hino-shi
Tokyo 191-0041 (JP)**

(74) Representative: **von Hellfeld, Axel
Wuesthoff & Wuesthoff
Patent- und Rechtsanwälte
Schweigerstrasse 2
81541 München (DE)**

(54) **Microscope apparatus**

(57)   A controller (2) controls a driving speed used when a distance is changed by driving an electric focusing mechanism (10) for adjusting the distance between a sample (S) as an observation target of a microscope (1) and an objective lens (13) based on a depth of focus of an optical observation system of the microscope (1).

EP 1 686 406 A2

## Description

## Background of the Invention

**Field of the Invention**

The present invention relates to a technology of a microscope, and more specifically to a technology of reducing the load of a microscope operator.

**Description of the Related Art**

Generally, in an observation using a microscope, a sample as an object is scaled up and an obtained image is observed using a lens group configuring an optical observation system. At this time, bringing an image to be observed into focus is adjusted by a so-called focusing mechanism for changing the relative distance between a sample and an objective lens. Basically, an image in focus can be obtained in a predetermined range of the distance between a sample and an objective lens, but the range greatly depends on the magnification of an optical observation system. That is, the higher the magnification is, the smaller the range becomes.

Conventionally, adjusting the focus of a microscope is performed according to the sense of a microscope user, and a higher learning level of adjusting a focusing mechanism is required when an observation is performed by greatly changing the magnification, and a considerably long time is required to control the mechanism.

In this situation, an electric focusing device capable of easily making the adjustment has recently been developed by electrically driving the focusing mechanism.

For example, Japanese Published Patent Application No. HEI 8-86965 and Japanese Published Patent Application No. 2002-72099 propose a microscope having a revolving objective lens switch mechanism in which a driving speed for the focusing mechanism can be automatically changed depending on the magnification of the currently used objective lens. According to the proposition, when the magnification of the objective lens is high, the driving speed for the focusing mechanism is reduced, and when the magnification of the objective lens is low, the driving speed for the focusing mechanism is increased. Thus, the microscope user can perform a focusing operation constantly with the same sense although the magnification of an optical observation system is changed.

In addition, for example, Japanese Published Patent Application No. 2004-226882 proposes a microscope for determining an observation magnification by a combination of a continuous scaling zoom mechanism and an objective lens in which the above-mentioned speed control of the focusing mechanism is applied.

In the above-mentioned conventional microscope, the speed of a focusing mechanism is uniquely determined to be a value set in advance depending on the magnification of an optical observation system. Therefore, the difference in operation sense depending on the learning level of a microscope user such as an expert in the operation of a microscope, a beginner of operating a microscope, etc. cannot be absorbed. Furthermore, since the depth of focus of an optical observation system changes depending on the stop level in a microscope having an AS (aperture stop) mechanism, the change also has to be considered in controlling the speed of the focusing mechanism.

## Summary of the Invention

According to an aspect of the present invention, a microscope apparatus includes: a drive unit for driving a focusing mechanism which adjusts the distance between a sample and an objective lens, and changing the distance; and a drive control unit for controlling the driving speed based on the depth of focus of an optical observation system.

It is preferable that the microscope apparatus according to the present invention further includes a scaling unit for changing the observation magnification for the sample, and the drive control unit controls the speed based on the magnification of the objective lens and the magnification of the scaling unit.

It is also preferable that the device further includes a storage unit storing information about the relationship between the speed and the magnification of the scaling unit, and the drive control unit controls the speed associated with the magnification of the scaling unit in the information by weighting it based on the magnification of the objective lens.

Otherwise, it is preferable that the drive control unit controls the speed based on the aperture gauge of the aperture stop provided in the optical observation system of the microscope apparatus.

At this time, it is also preferable that the device further includes a storage unit storing the information about the relationship between the speed and the magnification of the scaling unit and the information about the relationship between the speed and the aperture gauge of the aperture stop, and the drive control unit controls the speed associated with the magnification of the scaling unit and the aperture gauge of the aperture stop in the information by weighting it based on the magnification of the objective lens.

Furthermore, it is also preferable that the microscope apparatus according to the present invention includes the definition of a micromotion speed and a rough motion speed for the driving speed, and the drive control unit sets the micromotion speed based on the depth of focus of an optical observation system, and sets the rough motion speed as a constant multiple of the micromotion speed.

It is further preferable that the microscope apparatus according to the present invention further includes a drive instruction acquisition unit for acquiring an instruction to drive the focusing mechanism by an operation, and the drive control unit controls the amount of drive of the focusing mechanism relative to the amount of operation on the drive instruction acquisition unit based on the depth of focus.

According to another aspect of the present invention, a microscope control method determines the driving speed at which the focusing mechanism for adjusting the distance between the sample as an observation target in the microscope and the objective lens of the microscope is driven and the distance is changed based on the depth of focus of the optical observation system of the microscope, controls the drive unit for changing the distance by driving the focusing mechanism, and obtains the determined speed as the driving speed.

**Brief Description of the Drawings**

The present invention will be more apparent from the following detailed description when the accompanying drawings are referenced.

Fig. 1 shows the entire configuration of the microscope apparatus applied to a microscope according to the embodiment 1 of the present invention;

Fig. 2 shows the rough configuration of the controller according to the embodiment 1 of the present invention;

Fig. 3 shows the rough configuration of the operation input unit according to the embodiment 1 of the present invention;

Fig. 4 is a flowchart of the process contents of the control process according to the embodiment 1 of the present invention;

Fig. 5A is a flowchart of the process contents of the rough/micro motion switch button process;

Fig. 5B is a flowchart of the process contents of the FAR button process;

Fig. 5C is a flowchart of the process contents of the NEAR button process;

Fig. 5D is a flowchart of the process contents of the TELE button process according to the embodiment 1 of the present invention;

Fig. 5E is a flowchart of the process contents of the WIDE button process according to the embodiment 1 of the present invention;

Fig. 6 is a table showing an example of representative values of the driving speed of the electric focusing mechanism according to the embodiment 1 of the present invention;

Fig. 7 shows the entire configuration of the microscope apparatus applied to a microscope according to the embodiments 2 and 3 of the present invention;

Fig. 8 shows the rough configuration of the controller according to the embodiment 2 of the present invention;

Fig. 9 shows the rough configuration of the operation input unit according to the embodiment 2 of the present invention;

Fig. 10 is a flowchart of the process contents of the control process according to the embodiment 2 of the present invention;

Fig. 11A is a flowchart of the process contents of the AS mechanism initializing process;

Fig. 11B is a flowchart of the process contents of the button process;

Fig. 11C is a flowchart of the process contents of the TELE button process according to the embodiments 2 and 3 of the present invention;

Fig. 11D is a flowchart of the process contents of the WIDE button process according to the embodiments 2 and 3 of the present invention;

Fig. 11E is a flowchart of the process contents of the AS drive process;

Fig. 12 is a table showing an example of representative values of the driving speed of the electric focusing mechanism according to the embodiment 2 of the present invention;

Fig. 13 shows the rough configuration of the controller according to the embodiment 3 of the present invention;

Fig. 14 shows the rough configuration of the operation input unit according to the embodiment 3 of the present invention;

Fig. 15 is a flowchart of the process contents of the control process according to the embodiment 3 of the present invention;

Fig. 16 is a table showing an example of representative values of the amount of drive of the electric focusing mechanism according to the embodiment 3 of the present invention;

Fig. 17 is a flowchart of the process contents of the JOG drive process; and

Fig. 18 shows an example of a computer-readable recording medium reading a recorded control program.

**Description of the Preferred Embodiments**

The embodiments of the present invention are described below by referring to the attached drawings.

[Embodiment 1]

First described is the embodiment 1 of the present invention.

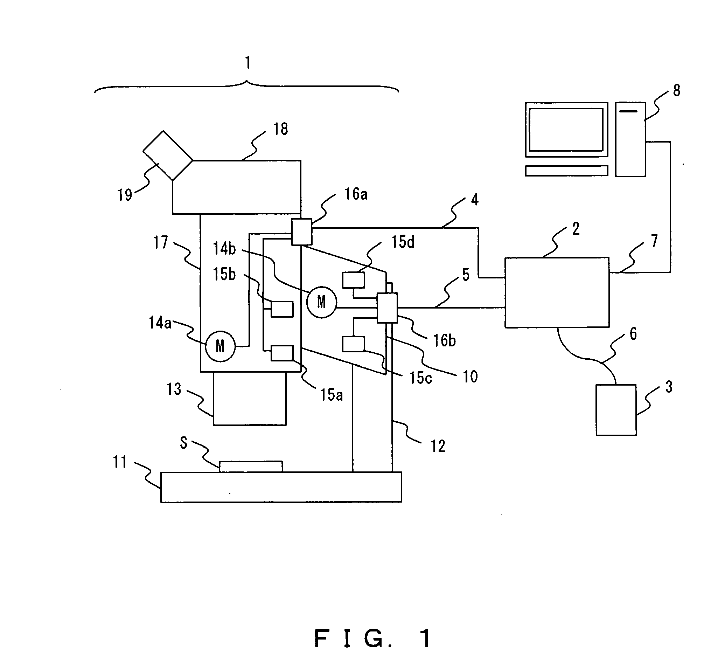

Fig. 1 shows the entire configuration of the microscope apparatus according to an embodiment of the present invention.
In Fig. 1, a reference numeral 1 designates a microscope body. The microscope body 1 is electrically connected through a controller 2 as a control unit, and cables 4 and 5. An operation input unit 3 in which various switches are arranged is electrically connected to the controller 2 through a cable 6. A PC (personal computer) 8 can be connected to the controller 2 through a cable 7.
In the microscope body 1, a column 12 is fixed to a stand 11 on which a sample S is placed. An electric focusing mechanism 10 and an electric zoom mirror 17 are incorporated into the column 12, and an objective lens 13 is attached as exchangeable to the objective lens holding member (not shown in the attached drawings) provided for the electric zoom mirror 17. That is, the electric focusing mechanism 10 arranges the objective lens 13 together with the electric zoom mirror 17 and the electric focusing mechanism 10 as freely movable in the direction along the column 12 opposite the stand 11.
A focusing mechanism stepping motor 14b as an electric drive unit for electrically changing the distance between the sample S and the objective lens 13, and a far limit sensor 15c and a near limit sensor 15d, which are formed by a photo-interrupter, are fixed to the electric focusing mechanism 10. These sensors are arranged such that when the electric focusing mechanism 10 reaches the uppermost point (far end) in the movable range by the up and down movement along the column 12, the far limit sensor 15c is turned on, and when it reaches the lowermost point (near end), the far limit sensor 15c is turned on. The focusing mechanism connector 16b attached to the electric focusing mechanism 10 is electrically connected to each of the focusing mechanism stepping motor 14b, the far limit sensor 15c, and the near limit sensor 15d via the cable not shown in the attached drawings, and functions as an interface to the controller 2 for a motor drive signal and a sensor signal.
A zoom mechanism stepping motor 14a as an electric drive unit, and a tele-limit sensor 15a and a wide-angle limit sensor 15b, which are formed by a photo-interrupter, are fixed to the electric zoom mirror 17. A zoom lens group (not shown in the attached drawings) is mechanically connected to the zoom mechanism stepping motor 14a through a cam mechanism (not shown in the attached drawings), etc. The electric zoom mirror 17 is configured such that the observation magnification of the sample S can be changed by rotating the zoom mechanism stepping motor 14a (hereinafter the configuration is referred to as a "zoom mechanism").
These sensors are arranged such that when the control of the observation magnification by the zoom mechanism of the electric zoom mirror 17 reaches the tele-end, the tele-limit sensor 15a is turned on, and when it reaches the wide-angle end, the wide-angle limit sensor 15b is turned on. A zoom mechanism connector 16a attached to the electric zoom mirror 17 is electrically connected to each of the zoom mechanism stepping motor 14a, the tele-limit sensor 15a, and the wide-angle limit sensor 15b via a cable not shown in the attached drawings, and functions as an interface to the controller 2 for a motor drive signal and a sensor signal.
Above the electric zoom mirror 17, a mirror cylinder 18 with an eyeglass 19 is fixed as removable.

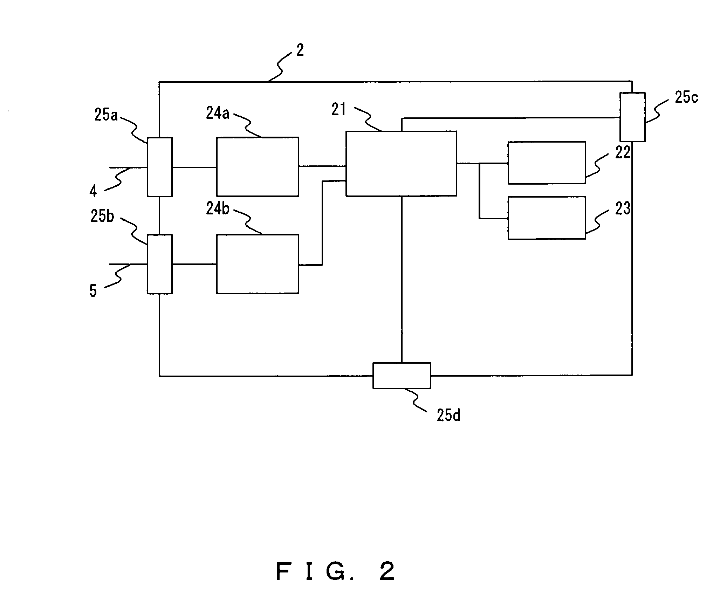

Fig. 2 shows the rough configuration of the controller 2 according to the present embodiment.
The controller 2 includes a microcomputer 21. The microcomputer 21 controls the entire microscope apparatus shown in Fig. 1. ROM 22 as a recording medium for storing a control program, RAM 23 for reserving variable data of the control program, a host interface connector 25c, and an operation input unit interface connector 25d are connected to the microcomputer 21.
A focusing unit motor driver 24b is also connected to the microcomputer 21, and a focusing mechanism control connector 25b is connected to the focusing unit motor driver 24b. The focusing mechanism control connector 25b is electrically connected to the focusing mechanism connector 16b via the cable 5. Therefore, the microcomputer 21 can drive the focusing mechanism stepping motor 14b through the focusing unit motor driver 24b, and can read a sensor signal from each of the near limit sensor 15d and the far limit sensor 15c.
Furthermore, the zoom unit motor driver 24a is connected to the microcomputer 21, and the zoom mechanism control connector 25a is connected to the zoom unit motor driver 24a. The zoom mechanism control connector 25a is electrically connected to the zoom mechanism connector 16a via the cable 4. Additionally, the microcomputer 21 can drive the zoom mechanism stepping motor 14a through the zoom unit motor driver 24a, and can read a sensor signal from each of the tele-limit sensor 15a and the wide-angle limit sensor 15b.
The microcomputer 21 is configured such that the zoom position address indicating the rotation angle of the zoom mechanism stepping motor 14a and the focusing position address indicating the rotation angle of the focusing mechanism stepping motor 14b can be stored in the RAM 23 to monitor the current position of each motor. Therefore, the microcomputer 21 can obtain the current observation magnification (zoom magnification) from the current zoom position address, and can obtain the current position of the objective lens 13 from the current focusing position address.

The operation input unit interface connector 25d and the operation input unit 3 through the cable 6 are connected to the microcomputer 21.

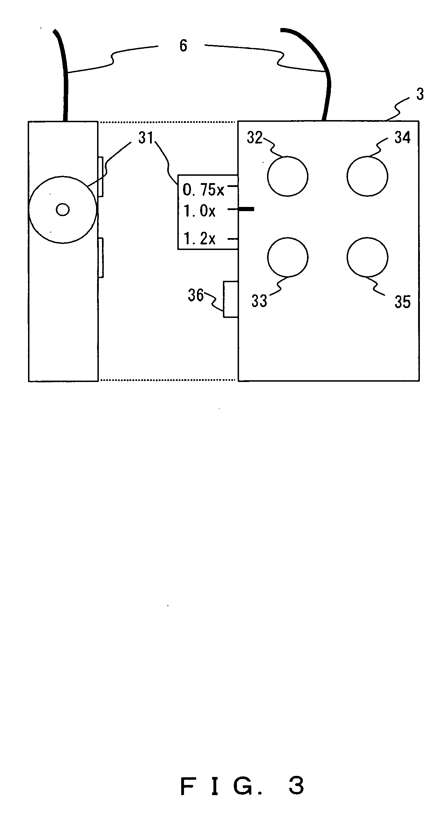

Fig. 3 shows the rough configuration of the operation input unit 3 according to the present embodiment.

The operation input unit 3 includes a focusing mechanism speed weight dial 31, a far direction focusing button (hereinafter referred to as a "FAR button") 32, a near direction focusing button (hereinafter referred to as a "NEAR button") 33, a zoom tele-direction button (hereinafter referred to as a "TELE" button) 34, a zoom wide-angle direction button (hereinafter referred to as a "WIDE" button) 35, and a focusing mechanism speed switch button (hereinafter referred to as a "rough/micro motion switch button") 36. The microcomputer 21 can read the operation statuses of these buttons and the position information about the focusing mechanism speed weight dial 31.

The focusing mechanism speed weight dial 31 is, for example, attached to a rotation axis which changes the resistance value of a variable resistor. The rough/micro motion switch button 36 is configured using a toggle switch changing in status each time the button is pressed.

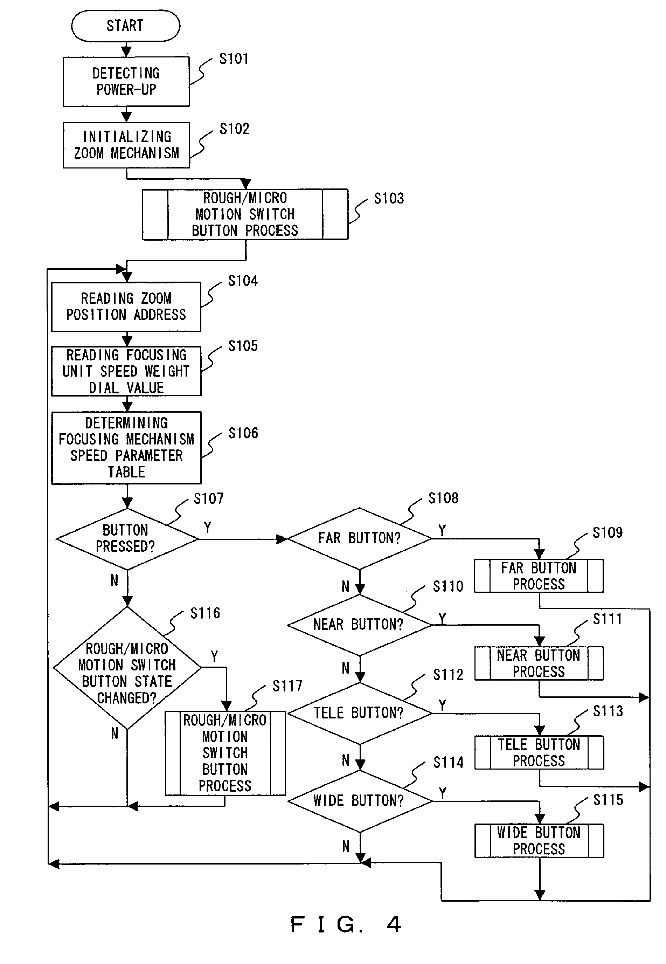

Fig. 4 is explained below. Fig. 4 is a flowchart of the process contents of the control process of the microscope apparatus shown in Fig. 1 performed by the microcomputer 21 of the controller 2 shown in Fig. 2. The control process is realized by the microcomputer 21 executing the control program stored in the ROM 22.

When the microscope apparatus is powered up in S101, control is passed to S102, and the zoom mechanism of the electric zoom mirror 17 is initialized.

In this initializing process, the microcomputer 21 instructs the zoom unit motor driver 24a to rotate and drive the zoom mechanism stepping motor 14a of the electric zoom mirror 17 in the wide-angle direction up to the position close to the wide-angle limit sensor 15b, defines the position as a zoom origin position, and sets the position as the current zoom position address "0", that is, the zoom origin position.

Then, it can drive the zoom mechanism stepping motor 14a, and perform the operation of returning to the zoom position at the power-up. However, in this case, after setting the above-mentioned zoom origin position as a zoom position address "0", the zoom position address in the zoom position at the power-up is calculated according to the drive signal of the zoom mechanism stepping motor 14a used in returning to the zoom position at the power-up, and the calculated address is set as the current zoom position address.

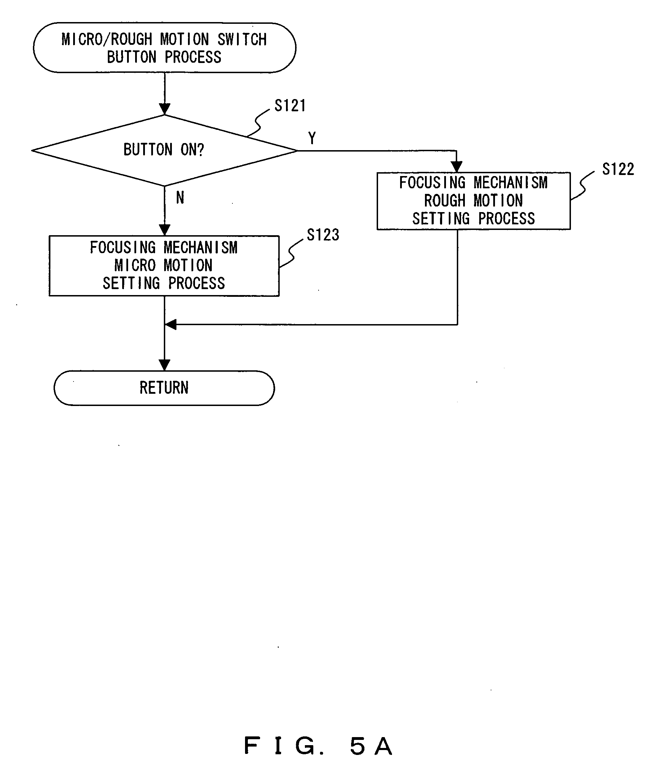

When the initializing process of the zoom mechanism is completed, the process of the rough/micro motion switch button 36 is performed in S103. Fig. 5A shows the details of the process.

In the flowchart shown in Fig. 5A, first in S121, it is determined whether or not the rough/micro motion switch button 36 has been turned on. If it is has been turned on (YES as a determination result), the microcomputer 21 recognizes in S122 that the speed of the currently selected electric focusing mechanism 10 refers to the rough motion speed (high speed mode), and then control is returned to the process in Fig. 4. On the other hand, if the rough/micro motion switch button 36 is OFF (determination result is NO), the microcomputer 21 recognizes that the speed of the currently selected electric focusing mechanism 10 is the micromotion speed (low speed mode) in S123, and then control is returned to the process in Fig. 4.

Back to Fig. 4, the above-mentioned current zoom position address is read in S104. Then, in S105, the set value of the focusing mechanism speed weight dial 31 is read. In S106, the speed parameter for driving the electric focusing mechanism 10 is determined based on these values. The method of determining the speed parameter is explained below.

In the present embodiment, the driving speed is determined based on the depth of focus of an optical observation system.

The depth of focus is determined by the numeral aperture (NA) and a magnification Ma of the optical observation system. The magnification Ma of the optical observation system is represented by the product of the magnification Mo of the objective lens 13 and the zoom magnification Mz of the electric zoom mirror 17, that is,

$$Ma = Mo \times Mz \ ... \ (1)$$

That is, the NA of the optical observation system represented by the value obtained by multiplying the NA of the objective lens 13 by the coefficient determined by the zoom magnification value of the electric zoom mirror 17.

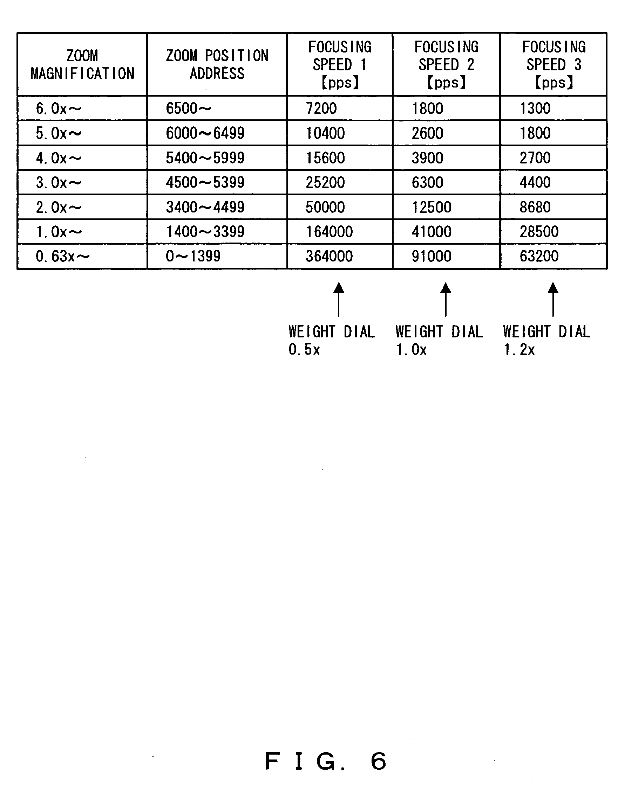

Fig. 6 is a table showing an example of the representative value of the driving speed of the electric focusing mechanism 10 according to the present embodiment. In this example, the entire movable range for zoom of the zoom mechanism is divided into seven ranges depending on the zoom magnification, and the driving speed parameter of the electric focusing mechanism 10 is determined for each range.

The unit of the driving speed in the table shown in Fig. 6 is expressed by the drive signal level pps (pulse per second) provided for the focusing mechanism stepping motor 14b. The larger the value is, the faster the speed is. The data forming the table is stored in the ROM 22 in advance. The value of the table indicates the focusing speed in the micromotion (low speed mode), and the focusing speed in the rough motion (high speed mode) is assumed to be represented by multiplying a focusing speed in the micromotion by a constant multiple.

The depth of focus is inversely proportional to the second power of the magnification Mo of the objective lens 13 when the objective lens 13 is exchanged with the zoom magnification determined by the electric zoom mirror 17 fixed. Then, the focusing speed weight coefficient Kf1 is defined as follows.

$$Kf1 = n/(Mo)^2 \ ...... \ (2)$$

where n is a constant.

The magnification Mo of the reference objective lens 13 and the focusing driving speed for each zoom magnification (in this example, based on the column of the "focusing speed 2" in Fig. 6) are set in advance, and are multiplied by the value Kf1 obtained by the equation (2) above, thereby calculating the focusing driving speed used when the magnification of the objective lens 13 is changed from the reference magnification.

In the present embodiment, by substituting the value read by the focusing mechanism speed weight dial 31 for the equation (2) above as the value of Mo, an arbitrary weight is set for the focusing speed and the speed can be controlled. Practically, depending on the set value of the focusing mechanism speed weight dial 31, any of the focusing driving speeds for each of the three zoom magnifications "focusing speed 1", "focusing speed 2", and "focusing speed 3" shown in the table in Fig. 6 is selected, and the focusing driving speed depending on the magnification of the objective lens 13 is calculated using the value shown in the selected column.

The focusing mechanism speed weight dial 31 is configured not by discrete values such as 0.5x, 1.0x, 1.5x, etc., but by continuously variable numbers. When the focusing mechanism speed weight dial 31 is set to an intermediate value, a value between the focusing driving speed values shown in the table in Fig. 6 is linearly interpolated.

The micromotion focusing speed and its constant multiple as a rough motion focusing speed calculated as described above can be assigned a higher limit value and a lower limit value. When a calculation result exceeds the limit values, the limit values are set as a focusing speed.

Back to Fig. 4, in S107, it is determined whether or not any button of the operation input unit 3 has been pressed. If it is determined that any button has been pressed (if the determination result is YES), the control process is performed depending on the pressed button in S108 through S115. If it is determined in S107 that no button has been pressed (if the determination result is NO), control is passed to S116.

The processes in S108 through S115 are further explained below.

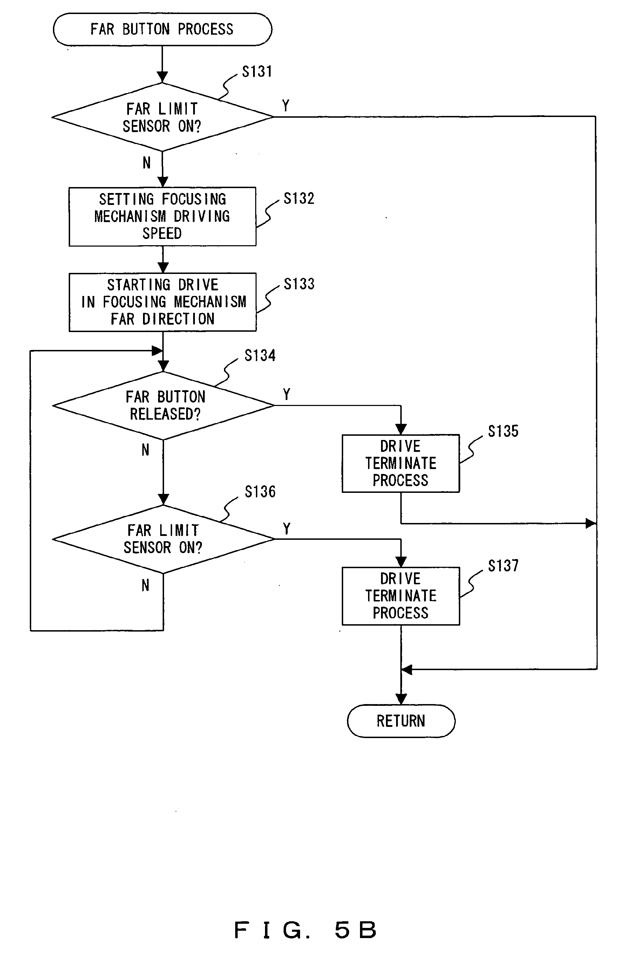

If it is determined in the determining process in S108 that the FAR button 32 has been pressed (if the determination result is YES), the FAR button process is performed in S109, and then control is returned to S104. Fig. 5B shows the details of the FAR button process.

In the flowchart shown in Fig. 5B, it is determined first in S131 whether or not the electric focusing mechanism 10 is placed in the position where the far limit sensor 15c is ON. If it is determined that the mechanism is placed in the position (if the determination result is YES), the FAR button process is terminated, and control is returned to the process in Fig. 4. If it is determined that the mechanism is not placed in the position (if the determination result is NO), the process of obtaining and setting the driving speed of the electric focusing mechanism 10 is performed in S132 based on the focusing driving speed parameter determined by the process in S106 shown in Fig. 4 and the selection of the speed (rough motion or micromotion) of the electric focusing mechanism 10 recognized in the process in S103 shown in Fig. 4.

In S133, the focusing unit motor driver 24b is instructed to drive the focusing mechanism stepping motor 14b, and start the movement in the far direction of the electric focusing mechanism 10.

Then, in S134, it is determined whether or not the FAR button 32 has been released (whether or not the pressed state has been stopped). If it is determined that the FAR button 32 has been released (if the determination result is YES), the focusing unit motor driver 24b is instructed in S135 to terminate driving the focusing mechanism stepping motor 14b, then the FAR button process is terminated, and control is returned to the process in Fig. 4.

In S134, if it is determined that the FAR button 32 has not been released (if the pressed state is continues) (if the determination result is NO), then it is determined in S136 whether or not the electric focusing mechanism 10 has reached the position where the far limit sensor 15c is ON. If it is determined that the mechanism has reached the position (if the determination result is YES), then the focusing unit motor driver 24b is instructed in S137 to terminate the drive of the focusing mechanism stepping motor 14b, the FAR button process is terminated, and control is returned to the process in Fig. 4. On the other hand, if it is determined that the mechanism has not reached the position (if the determination result is NO), control is returned to S134, and the drive of the electric focusing mechanism 10 continues until the FAR button 32 is once released or until the far limit sensor 15c is ON.

The above-mentioned processes form the FAR button process.

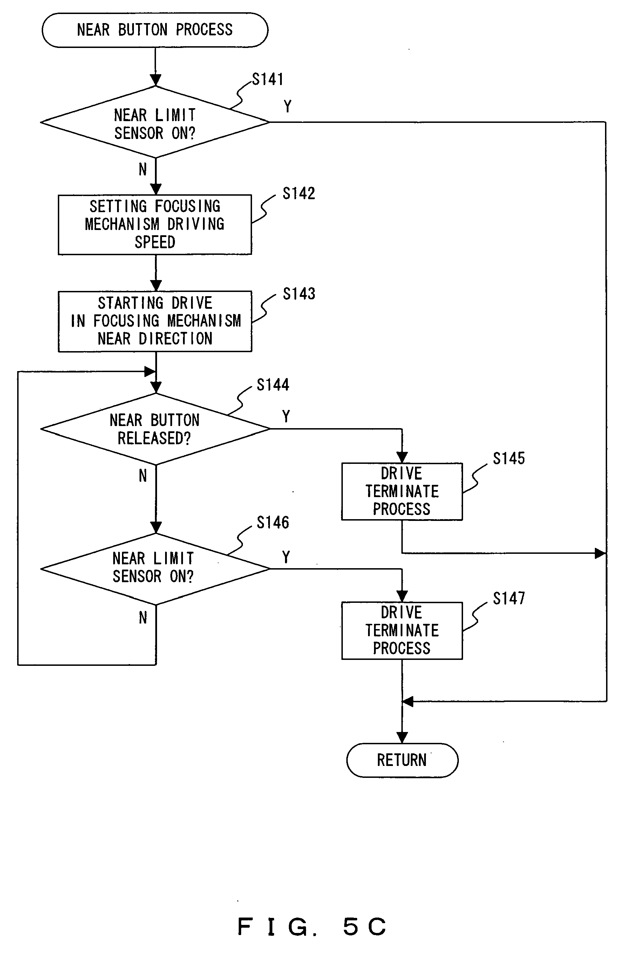

Back to Fig. 4, if it is determined in the determining process in S108 that the FAR button 32 has not been pressed (if the determination result is NO), control is passed to S110. If it is determined in the determining process in S110 that the NEAR button 33 has been pressed (if the determination result is YES), the NEAR button process is performed in S111, and then control is returned to S104. The details of the NEAR button process are shown in Fig. 5C.

In the flowchart shown in Fig. 5C, first in S141, it is determined whether or not the electric focusing mechanism 10 is placed in the position where the near limit sensor 15d is ON. If it is determined that the mechanism is placed in the position (if the determination result is YES), the NEAR button process is terminated, and control is returned to the process in Fig. 4. On the other hand, if it is determined that the mechanism is not placed in the position (if the determination result is NO), the process of obtaining and setting the driving speed of the electric focusing mechanism 10 is performed in S142 based on the focusing driving speed parameter determined by the process in S106 shown in Fig. 4 and the selection of the speed (rough motion or micromotion) of the electric focusing mechanism 10 recognized in the process in S103 shown in Fig. 4.

Then, in S143, the focusing unit motor driver 24b is instructed to drive the focusing mechanism stepping motor 14b, and start the movement in the near direction of the electric focusing mechanism 10.

Then, in S144, it is determined whether or not the NEAR button 33 has been released (whether or not the pressed state has been stopped). If it is determined that the NEAR button 33 has been released (if the determination result is YES), the focusing unit motor driver 24b is instructed in S145 to terminate driving the focusing mechanism stepping motor 14b, then the NEAR button process is terminated, and control is returned to the process in Fig. 4.

In S144, if it is determined that the NEAR button 33 has not been released (if the button is being pressed) (if the determination result is NO), then it is determined in S146 whether or not the electric focusing mechanism 10 has reached the position where the near limit sensor 15d is ON. If it is determined that the mechanism has reached the position (if the determination result is YES), then the focusing unit motor driver 24b is instructed in S147 to terminate the drive of the focusing mechanism stepping motor 14b, the NEAR button process is terminated, and control is returned to the process in Fig. 4. On the other hand, if it is determined that the mechanism has not reached the position (if the determination result is NO), control is returned to S144, and the drive of the electric focusing mechanism 10 continues until the NEAR button 33 is once released or until the near limit sensor 15d is ON.

The above-mentioned processes form the NEAR button process.

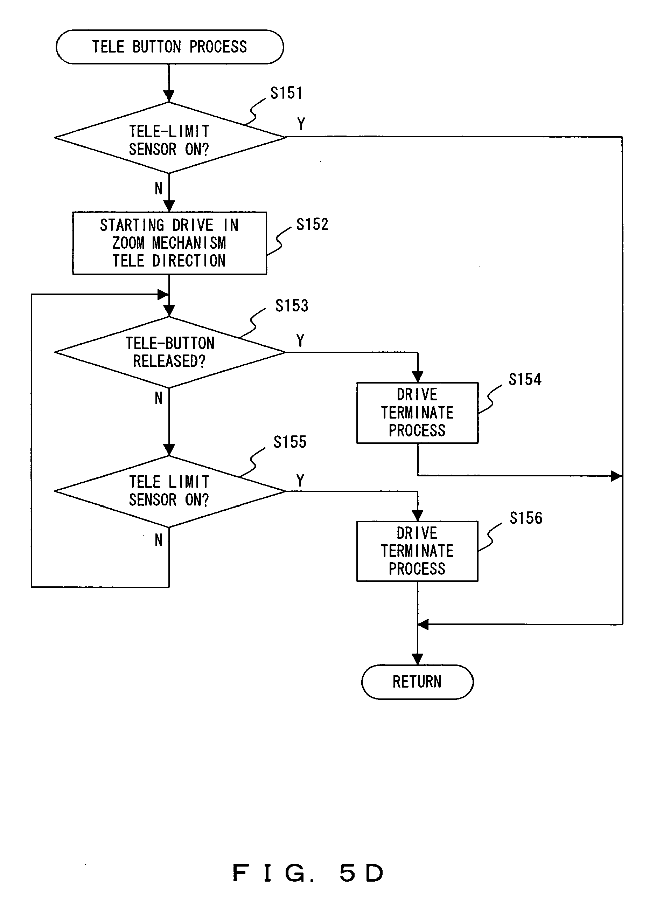

Back to Fig. 4, if it is determined in the determining process in S110 that the NEAR button 33 has not been pressed (if the determination result is NO), control is passed to S112. If it is determined in the determining process in S112 that the TELE button 34 has been pressed (if the determination result is YES), the TELE button process is performed in S113, and then control is returned to S104. The details of the TELE button process in the present embodiment are shown in Fig. 5D.

In the flowchart shown in Fig. 5D, first in S151, it is determined whether or not the zoom mechanism of the electric zoom mirror 17 is placed in the position where the tele-limit sensor 15a is ON. If it is determined that the mechanism is place in the position (if the determination result is YES), then the TELE button process is terminated, and control is returned to the process in Fig. 4. If it is determined that the mechanism is not placed in the position (if the determination result is NO), the zoom unit motor driver 24a is instructed in S152 to drive the zoom mechanism stepping motor 14a, and start the movement of the zoom mechanism in the tele-direction.

Then, in S153, it is determined whether or not the TELE button 34 is released (whether or not the pressed state has been stopped). If it is determined that the TELE button 34 has been released (if the determination result is YES), the zoom unit motor driver 24a is instructed in S154 to terminate the drive of the zoom mechanism stepping motor 14a. Then, the TELE button process is terminated, and control is returned to the process in Fig. 4.

If it is determined in S153 that the TELE button 34 has not been released (if the pressed state is continued) (if the determination result is NO), then it is determined in S155 whether or not the zoom mechanism of the electric zoom mirror 17 has reached the position where the tele-limit sensor 15a is ON. If it is determined that the mechanism has reached the position (the determination result is YES), then the zoom unit motor driver 24a is instructed in S156 to terminate the drive of the zoom mechanism stepping motor 14a. Then, the TELE button process is terminated and control is returned to the process in Fig. 4. On the other hand, if it is determined that the mechanism has not reached the position (if the determination result is NO), control is returned to S153, and the drive of the zoom mechanism of the electric zoom mirror 17 is continued until the TELE button 34 is once released or the tele-limit sensor 15a is ON.

Described above is the TELE button process. In the processes in S154 and S156 in which the drive of the zoom mechanism is terminated, the current zoom position address at the time of the termination of the drive is calculated based on the difference between the zoom position address before starting the drive and the zoom position address corresponding to the drive of the zoom mechanism stepping motor 14a, and the calculation result is stored in the RAM 23.

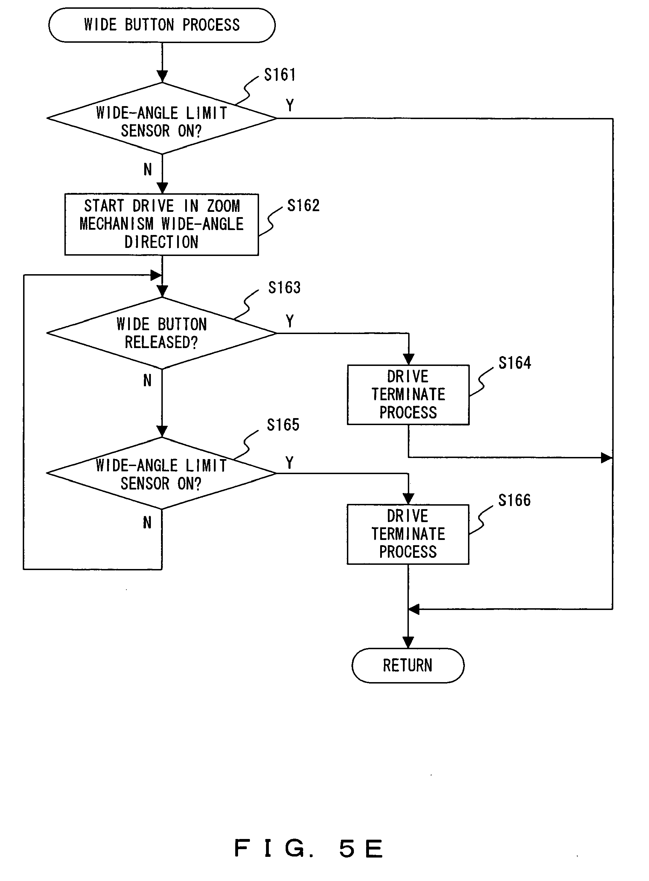

Back in Fig. 4, if it is determined in the determining process in S112 that the TELE button 34 has not been pressed (if the determination result is NO), control is passed to the process in S114. If it is determined in the determining process in S114 that the WIDE button 35 has been pressed (if the determination result is YES), the WIDE button process is performed in S115, and then control is returned to S104. The details of the WIDE button process according to the present embodiment are shown in Fig. 5E.

In the flowchart shown in Fig. 5E, it is first determined in S161 whether or not the zoom mechanism of the electric zoom mirror 17 is placed in the position where the wide-angle limit sensor 15b is ON. If it is determined that the mechanism is placed in the position (if the determination result is YES), the WIDE button process is terminated and control is returned to the process in Fig. 4. On the other hand, if it is determined that the mechanism has not reached the position (if the determination result is NO), the zoom unit motor driver 24a is instructed in S162 to drive the zoom mechanism stepping motor 14a to start movement of the zoom mechanism in the wide-angle direction.

Then, in S163, it is determined whether or not the WIDE button 35 has been released (whether or not the pressed state has been stopped). If it is determined that the WIDE button 35 has been released (if the determination result is YES), the zoom unit motor driver 24a is instructed in S164 to terminate the drive of the zoom mechanism stepping motor 14a, and then the WIDE button process is terminated and control is returned to the process in Fig. 4.

If it is determined in S163 that the WIDE button 35 has not been released (if the pressed state is continued) (if the determination result is NO), then it is determined in S165 whether or not the zoom mechanism of the electric zoom mirror 17 has reached the position where the wide-angle limit sensor 15b is ON. If it is determined that the mechanism has reached the position (if the determination result is YES), then the zoom unit motor driver 24a is instructed in S166 to terminate the drive of the zoom mechanism stepping motor 14a, the WIDE button process is terminated, and control is returned to the process in Fig. 4. On the other hand, if it is determined that the mechanism has not reached the position (if the determination result is NO), control is returned to S163, and the drive of the zoom mechanism of the electric zoom mirror 17 is continued until the WIDE button 35 is once released or the wide-angle limit sensor 15b is ON.

Described above is the WIDE button process. In the processes in S164 and S166 in which the drive of the zoom mechanism is terminated, the current zoom position address at the time of the termination of the drive is calculated based on the difference between the zoom position address before starting the drive and the zoom position address corresponding to the drive of the zoom mechanism stepping motor 14a, and the calculation result is stored in the RAM 23.

Back in Fig. 4, if it is determined in the determining process in S114 that the WIDE button 35 has not been pressed (if the determination result is NO), control is returned to the process in S104, and the above-mentioned processes are repeated.

In the determining process in S107, if it is determined that any of the above-mentioned buttons has not been pressed, it is determined in S116 whether or not the rough/micro motion switch button 36 has been pressed and the state has been changed. If it is determined that the state has been changed (if the determination result is YES), then the process on the rough/micro motion switch button 36 is performed in S117. Then, control is returned to S104, and the above-mentioned processes are repeated. The details of the process in S117 are similar to the process in S103, that is, the process shown in Fig. 5A. Therefore, the explanation about the process is omitted here.

If it is determined in the determining process in S116 that the state has not been changed (if the determination result is NO), then control is returned to S104, and the above-mentioned processes are repeated.

By the above-mentioned processes performed by the microcomputer 21, the controller 2 controls the microscope apparatus shown in Fig. 1.

As described above, according to the present embodiment, in the microscope apparatus shown in Fig. 1 having the electric focusing mechanism 10 and the zoom scaling mechanism of the electric zoom mirror 17, the driving speed of the electric focusing mechanism 10 is determined based on the value of the focusing mechanism speed weight dial 31 set depending on the magnification of the objective lens 13 combined with the zoom scaling mechanism and the zoom magnification by the zoom scaling mechanism. Thus, according to the present embodiment, when the test sample S is observed with the scale-up factor changed, the operation of the focusing mechanism can be performed equally by any scale-up factor, thereby reducing the load of the user in the focusing operation.

In addition, by adjusting the focusing mechanism speed weight dial 31, both an expert and a beginner in bringing an object into focus can obtain the operation sense about the focusing mechanism. Therefore, various types of users can be provided with a microscope with excellent focusing operation.

In the present embodiment, for the driving speed of the electric focusing mechanism 10, the reference magnification of an objective lens and the focusing speed for each zoom magnification are set in advance, and the set value is multiplied by a focusing speed weight coefficient Kf1. Otherwise, a pseudo NA of an optical observation system and magnification value information can be assigned in advance to the value of the focusing mechanism speed weight dial 31, the depth of focus can be calculated based on the composite NA and a composite magnification value calculated by a combination of the pseudo value and each zoom magnification, and the constant multiple can be used as the driving speed of the electric focusing mechanism 10.

Furthermore, in the present embodiment, for the driving speed of the electric focusing mechanism 10, the entire zoom magnification range by the zoom mechanism of the electric zoom mirror 17 is divided into seven ranges and set as shown by the table shown in Fig. 6. Otherwise, an approximation equation can be obtained to acquire a continuous value as a function having a zoom position address value as an argument, and the driving speed of the electric focusing mechanism 10 can be calculated by performing a calculation by the equation.

In the present embodiment, an electric zoom mechanism (electric zoom mirror 17) is used as means for zoom scaling. Otherwise, the manual zoom mechanism and the zoom position sensing unit (for example, a unit for connecting a variable resistor to a zoom operation handle to detect the zoom position depending on the change of the variable resistor, or measure the zoom lens position using a linear sensor, etc.) can be provided for the microscope apparatus shown in Fig. 1, thereby obtain the above-mentioned effect.

Additionally, in the present embodiment, the operation input unit 3 is a single operation unit. Otherwise, for example, a stand or a column of a microscope body, or an operation unit such as a button, a dial, etc. can be arranged for the zoom mechanism.

In the present embodiment, a reference objective lens magnification of the focusing mechanism driving speed and the focusing speed for each zoom magnification are set in advance. Otherwise, it can be arbitrarily set from the PC 8, etc. connected from an external interface of the controller 2 through the cable 7.

Furthermore, in the present embodiment, the rough motion focusing speed of the driving speed of the electric focusing mechanism 10 is defined as a constant multiple of the micromotion focusing speed. Otherwise, it can be fixed to a predetermined high speed.

In the present embodiment, the focusing mechanism speed weight dial 31 is configured using a variable resistor. Otherwise, it also can be configured using a rotary DIP switch.

[Embodiment 2]

Described below is the embodiment 2 according to the present invention.

The feature of the present embodiment resides in that an electric AS (aperture stop) mechanism is added to the electric zoom mirror 17, and the speed control of the electric focusing mechanism 10 is performed with the depth of focus of an optical observation system changing depending on the aperture gauge of the AS taken into account.

In the present embodiment, the component similar to that in the embodiment 1 is assigned the same reference numeral, and the detailed explanation is omitted here.

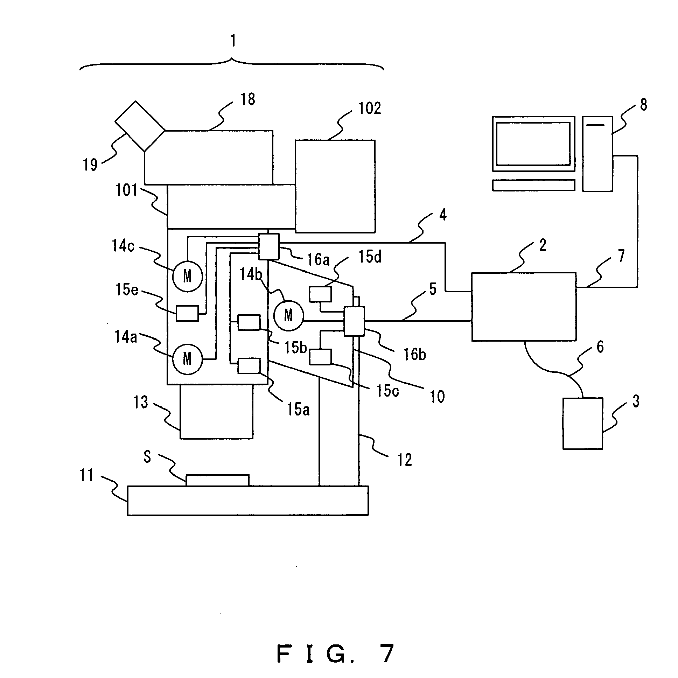

Fig. 7 shows the entire configuration of the microscope apparatus according to the present embodiment.

The microscope apparatus shown in Fig. 7 is configured by adding an AS mechanism stepping motor 14c as electric means for an AS mechanism and a CLOSE limit sensor 15e formed by a photo-interrupter to the electric zoom mirror 17 according to the embodiment 1 shown in Fig. 1.

A diaphragm (not shown in the attached drawings) is mechanically connected to the AS mechanism stepping motor 14c through a gear (not shown in the attached drawings). By controlling the rotation of the AS mechanism stepping motor 14c, the aperture gauge of the diaphragm is changed (hereinafter referred to as an "AS mechanism").

The CLOSE limit sensor 15e is configured to be turned on when the aperture gauge of the diaphragm reaches the minimum gauge. The direction of the drive for the minimum aperture gauge of the AS mechanism is called a CLOSE direction, and the direction of the drive for the maximum aperture gauge is called an OPEN direction.

The zoom mechanism connector 16a arranged in the electric zoom mirror 17 is electrically connected by the cable not shown in the attached drawings to each of the zoom mechanism stepping motor 14a, the tele-limit sensor 15a, the wide-angle limit sensor 15b, the AS mechanism stepping motor 14c, and the CLOSE limit sensor 15e, and functions as an interface with the controller 2 for a motor drive signal and a sensor signal.

Above the electric zoom mirror 17, an emission tube 101 and a lamp house 102 are arranged, thereby forming what is called an incident-light observation system. The lamp house 102 is arranged such that the focal point for an image of the lamp house 102 can be formed on the diaphragm, and the AS adjustment can be made by the aperture gauge of the diaphragm.

Furthermore, above the emission tube 101, the mirror cylinder 18 in which the eyeglass 19 is arranged is fixed. The mirror cylinder 18 is removable.

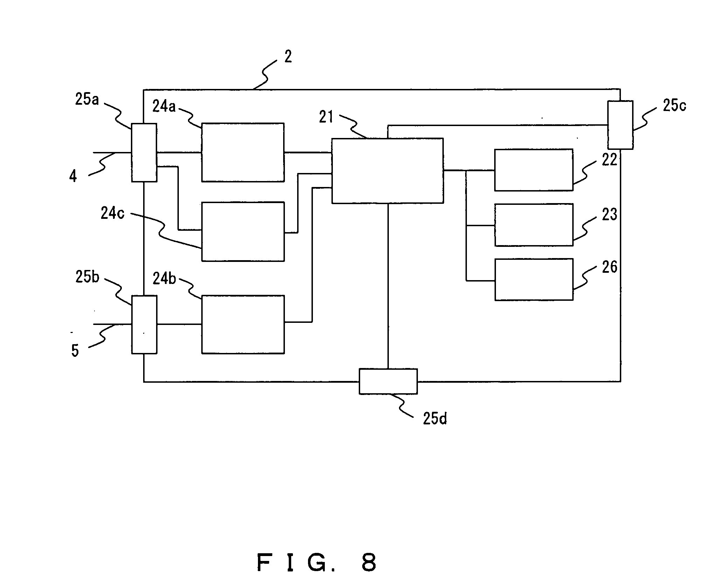

Fig. 8 shows the rough configuration of the controller 2 according to the identifier.

The controller 2 shown in Fig. 8 is configured by connecting an AS unit motor driver 24c and a DIPSW 26 to the microcomputer 21 in addition to the configuration according to the embodiment 1 shown in Fig. 2.

The zoom mechanism control connector 25a is connected to the AS unit motor driver 24c, and is further electrically connected to the zoom mechanism connector 16a via the cable 4. Therefore, the microcomputer 21 can drive the AS mechanism stepping motor 14c through the AS unit motor driver 24c, and can read a sensor signal from the CLOSE limit sensor 15e.

The microcomputer 21 can monitor the current position of each motor by storing in the RAM 23 an AS position address indicating the rotation angle of the AS mechanism stepping motor 14c, a zoom position address indicating the rotation angle of the zoom mechanism stepping motor 14a, and a focusing position address indicating the rotation angle of the focusing mechanism stepping motor 14b. Additionally, the microcomputer 21 can obtain the aperture gauge of the diaphragm from the current AS position address, obtain the current observation magnification (zoom magnification) from the current zoom position address, and can further obtain the current objective lens 13 from the current focusing position address.

Furthermore, the operation input unit 3 is connected to the microcomputer 21 through the cable 6.

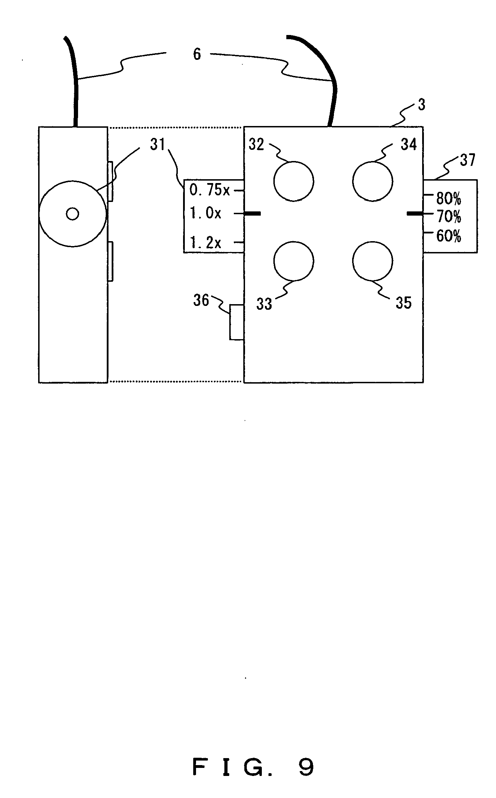

Fig. 9 shows the rough configuration of the operation input unit 3 according to the present embodiment.

The operation input unit 3 shown in Fig. 9 is provided with an AS setting dial 37 in addition to the configuration according to the embodiment 1 shown in Fig. 3. The AS setting dial 37 is, for example, attached to the rotation axis changing the resistance value in the variable resistor, detects a set value of the AS setting dial 37 based on the resistance value, and notifies the controller 2 of the value.

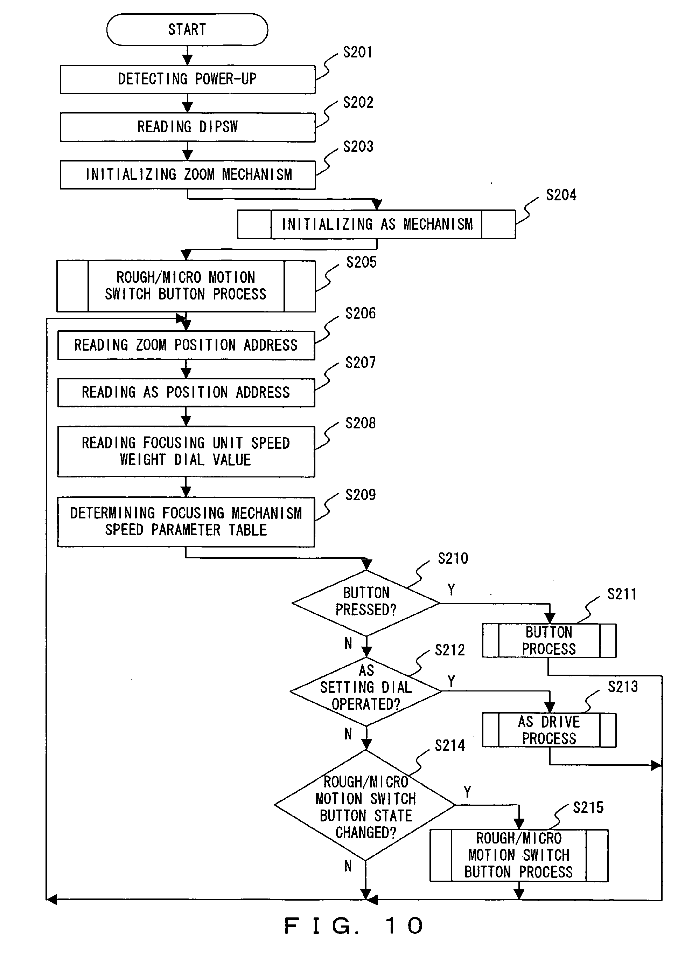

Described below is the flowchart shown in Fig. 10. Fig. 10 is a flowchart showing the process contents of the control process of the microscope apparatus shown in Fig performed by the microcomputer 21 of the controller 2 shown in Fig. 8. The control process is realized by the microcomputer 21 performing the control program stored in the ROM 22.

First, when the power-up of the microscope apparatus is detected in S201, the set value of the DIPSW 26 arranged in the controller 2 is read in S202. By the settings made for the DIPSW 26 in advance, the information indicating the types (and the availability with the AS mechanism as necessary) of the objective lens 13 incorporated into the electric zoom mirror 17 is shown.

In S203, the zoom mechanism of the electric zoom mirror 17 is initialized.

In this initializing process, the microcomputer 21 instructs the zoom unit motor driver 24a to rotate and drive the zoom mechanism stepping motor 14a of the electric zoom mirror 17 in the wide-angle direction up to the position close to the wide-angle limit sensor 15b, defines the position as a zoom origin position, and sets the position as the current zoom position address "0", that is, the zoom origin position.

Then, it can drive the zoom mechanism stepping motor 14a, and perform the operation of returning to the zoom position at the power-up. However, in this case, after setting the above-mentioned zoom origin position as a zoom position address "0", the zoom position address in the zoom position at the power-up is calculated according to the drive signal of the zoom mechanism stepping motor 14a used in returning to the zoom position at the power-up, and the calculated address is set as the current zoom position address.

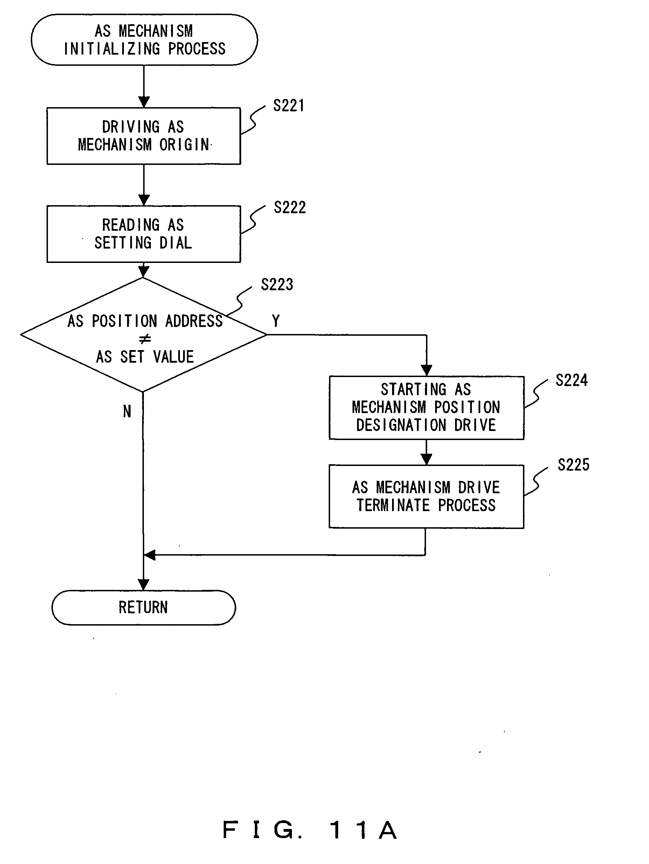

When the initializing process of the zoom mechanism is completed, the AS message initializing process is performed in S204. Fig. 11A shows the details of the process.

In the flowchart shown in Fig. 11A, first in S221, the AS message origin obtaining process, that is, the process of instructing the AS unit motor driver 24c to rotate the AS mechanism stepping motor 14c of the AS mechanism in the CLOSE direction up to the near position of the CLOSE limit sensor 15e, defining the position as the AS origin position, and setting it as the current AS position address "0" is performed.

In S222, the process of reading a set value o the AS setting dial 37 is performed. In this process, the set value of the AS setting dial 37 and the current zoom position address are referred to, and an AS set value is calculated from the type of the objective lens 13 determined based on the set value of the DIPSW 26 read in the process in S202 shown in Fig. 10.

The AS set value refers to an AS position address for control of the AS mechanism for obtaining the aperture gauge specified by the AS setting dial 37. The AS set value is based on the objective lens 13 and the iris gauge formed by a zoom lens group of the zoom mechanism, and is determined by the AS setting dial 37 which specifies the percent of the iris gauge as the aperture gauge of the diaphragm of the AS mechanism. The iris gauge changes depending on the type of the objective lens 13 and the zoom magnification of the zoom mechanism. Therefore, the information about the change of the iris gauge is stored in advance in the ROM 22 of the controller 2, and the AS set value is calculated according to the information.

In S223, it is determined whether or not the calculated AS set value is different from the current AS position address. If they match each other (if the determination result is NO), control is returned to the process in Fig. 10. On the other hand, if they are different (if the determination result is YES), then the AS mechanism position specification driving process, that is, the AS unit motor driver 24c is instructed in S224 to start driving the AS mechanism stepping motor 14c in the direction of the AS position address approaching the AS set value. When the current AS position address matches the AS set value, the AS mechanism position specification driving process is terminated in S225, and then control is returned to the process shown in Fig. 10.

Described above is the initializing process of the AS mechanism.

Back to Fig. 10, when the initializing process of the AS mechanism terminates, the process of the rough/micro motion switch button 36 is performed in S205. Since the details of the process are similar to these according to the embodiment 1 shown in Fig. 5A, the explanation is omitted here.

Then, in S206, the process of reading the above-mentioned current zoom position address is performed. In S207, the process of reading the above-mentioned AS position address is performed. Then, in S208, the process of reading the set value of the focusing mechanism speed weight dial 31 is performed. In S209, the process of determining the speed parameter for drive of the electric focusing mechanism 10 based on these values is performed. Described below is the method of determining the speed parameter.

In the present embodiment, the driving speed of the electric focusing mechanism 10 is determined based on the depth of focus of the optical observation system.

The depth of focus is determined by the numeral aperture (NA) and a magnification Ma of the optical observation system. The magnification Ma of the optical observation system is represented by the product of the magnification Mo of the objective lens 13 and the zoom magnification Mz of the electric zoom mirror 17, that is,

$$Ma = Mo \times Mz \dots (3)$$

The above-mentioned process is the same as that according to the embodiment 1.

In the present embodiment, the NA of the optical observation system is determined based on the AS aperture gauge of the AS mechanism in addition to the NA of the objective lens 13 and the zoom magnification value of the electric zoom mirror 17. The larger the AS aperture gauge is, the smaller the value is.

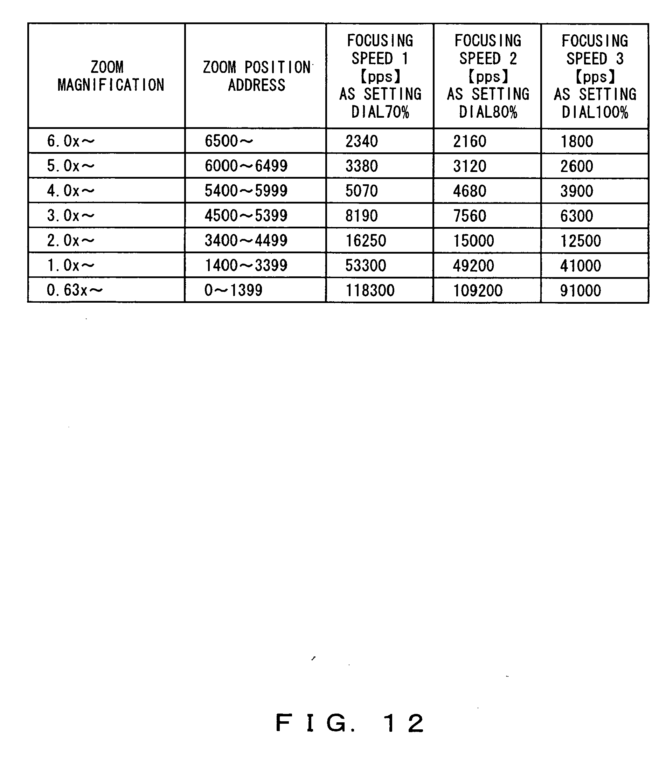

Fig. 12 is a table showing a representative value of the driving speed of the electric focusing mechanism 10 according to the present embodiment. In this example, the entire movable range for zoom of the zoom mechanism is divided into seven ranges depending on the zoom magnification, and the driving speed parameter of the electric focusing mechanism 10 is determined for each range.

The unit of the driving speed in the table shown in Fig. 12 is expressed by the drive signal level pps (pulse per second) provided for the focusing mechanism stepping motor 14b. The larger the value is, the faster the speed is. The data forming the table is stored in the ROM 22 in advance. The value of the table indicates the focusing speed in the micromotion (low speed mode), and the focusing speed in the rough motion (high speed mode) is assumed to be represented by multiplying a focusing speed in the micromotion by a constant multiple.

The depth of focus is inversely proportional to the second power of the magnification Mo of the objective lens 13 when the objective lens 13 is exchanged with the zoom magnification determined by the electric zoom mirror 17 fixed. Then, the focusing speed weight coefficient Kf1 is defined as follows.

$$Kf1 = n/(Mo)^2 \dots (4)$$

where n is a constant.

When the AS aperture gauge is changed with the magnification of the optical observation system fixed, the depth of focus changes substantially proportional to the rate (hereinafter referred to as an "AS aperture rate") of the AS aperture gauge relative to the above-mentioned iris gauge. When the proportional coefficient is Ks, the depth of focus is expressed by the following equation.

$$\text{Depth of Focus} = Ks \times \{1 / (\text{AS aperture rate})\} \times (\text{depth of focus at AS aperture}$$
$$\text{rate of 100\%}) + b \dots (5)$$

where b is a constant.

The magnification Mo of the reference objective lens 13 and the focusing driving speed for each zoom magnification (in this example, based on the column of the "focusing speed 3" in Fig. 12) are set in advance, and are multiplied by the value Kf1 obtained by the equation (4) above and the above-mentioned {Ks x 1 / (AS aperture rate)}, thereby calculating the focusing driving speed used when the magnification of the objective lens 13 is changed from the reference magnification and when the AS aperture rate is changed.

In the present embodiment, by substituting the value read by the focusing mechanism speed weight dial 31 for the equation (4) above as the value of Mo, an arbitrary weight is set for the focusing speed and the speed can be controlled. The focusing mechanism speed weight dial 31 is configured not by a discrete value such as "0.5x", "1.0x", or "1.5x", but by a continuously variable. The table shown in Fig. 12 indicates the focusing driving speed when the focusing mechanism speed weight dial 31 is set to "1.0x".

The micromotion focusing speed and its constant multiple as a rough motion focusing speed calculated as described above can be assigned a higher limit value and a lower limit value. When a calculation result exceeds the limit values, the limit values are set as a focusing speed.

Back to Fig. 10, in S210, it is determined whether or not any button of the operation input unit 3 has been pressed. If it is determined that any button has been pressed (if the determination result is YES), the button process is performed in S211. Afterwards, control is returned to the process in S206. The details of the button process are shown in Fig. 111B.

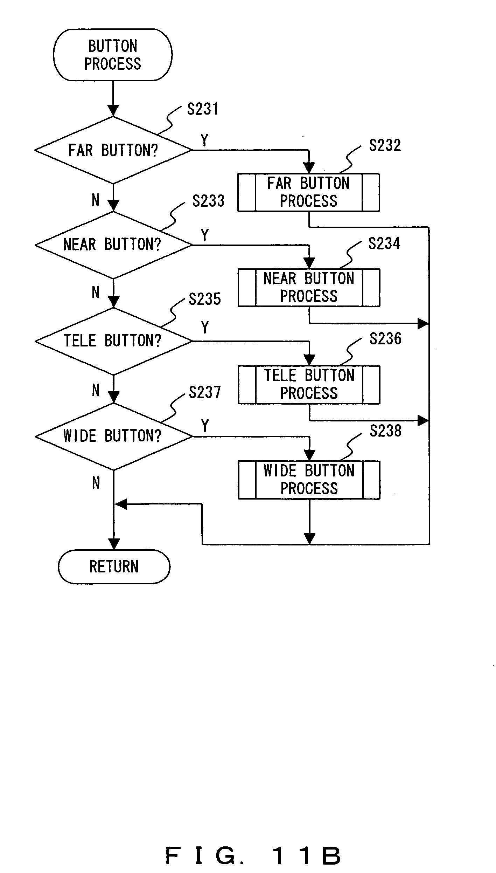

The flowchart shown in Fig. 11B is explained below. First, in S231, it is determined whether or not the FAR button 32 has been pressed. If it is determined that the FAR button 32 has been pressed (if the determination result is YES), the FAR button process is performed in S232, and then control is returned to the process shown in Fig. 10. Since the details of the FAR button process are the same as those according to the embodiment 1 shown in Fig. 5B, the explanation is omitted here.

On the other hand, if it is determined in the determining process in S231 that the FAR button 32 has not been pressed (if the determination result is NO), it is determined in S233 whether or not the NEAR button 33 has been pressed. If it is determined that the NEAR button 33 has been pressed (if the determination result is YES), the NEAR button process is performed in S234, and then control is returned to the process shown in Fig. 10. Since the details of the NEAR button process are similar to those according to the embodiment 1 shown in Fig. 5C, the explanation is omitted here.

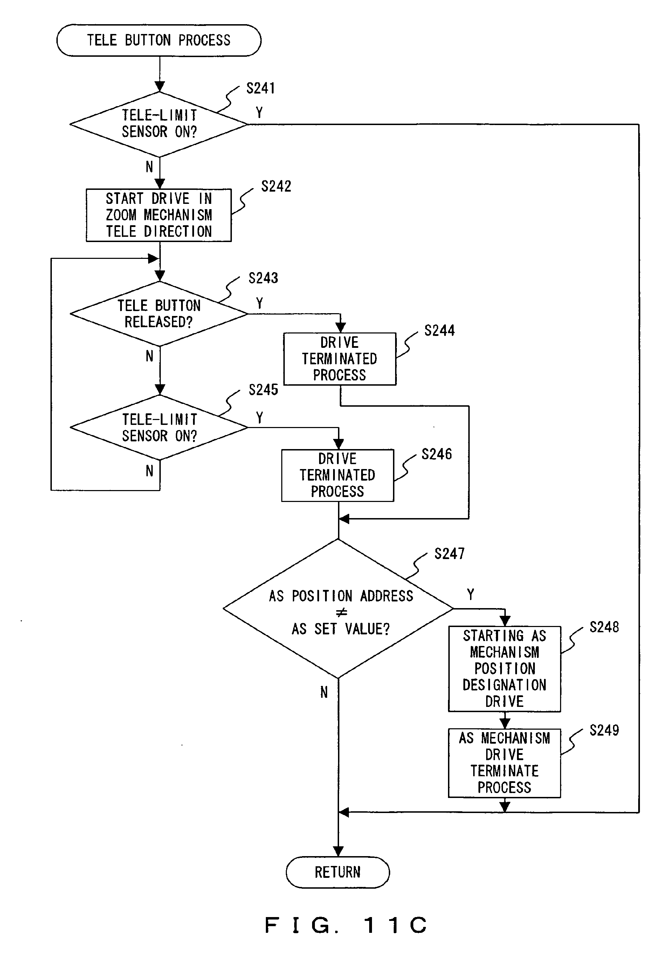

If it is determined in the determining process in S233 that the NEAR button 33 has not been pressed (if the determination result is NO), then it is determined in S235 whether or not the TELE button 34 has been pressed. If it is determined that the TELE button 34 has been pressed (if the determination result is YES), the TELE button process is performed in S236, and then control is returned to the process shown in Fig. 10. The details of the TELE button process according to the present embodiment are shown in Fig. 11C.

The flowchart shown in Fig. 11C is explained below. First in S241, it is determined whether or not the zoom mechanism of the electric zoom mirror 17 is placed in the position where the tele-limit sensor 15a is ON. If it is determined that the mechanism is place in the position (if the determination result is YES), then the TELE button process is terminated, and control is returned to the process in Fig. 11B (that is, the process shown in Fig. 10). If it is determined that the mechanism is not placed in the position (if the determination result is NO), the zoom unit motor driver 24a is instructed in S242 to drive the zoom mechanism stepping motor 14a, and start the movement of the zoom mechanism in the tele-direction.

Then, in S243, it is determined whether or not the TELE button 34 is released (whether or not the pressed state has been stopped). If it is determined that the TELE button 34 has been released (if the determination result is YES), the zoom unit motor driver 24a is instructed in S244 to terminate the drive of the zoom mechanism stepping motor 14a. Then, the TELE button process is terminated, and control is passed to the process in S247.

If it is determined in S243 that the TELE button 34 has not been released (if the pressed state is continued) (if the determination result is NO), then it is determined in S245 whether or not the zoom mechanism of the electric zoom mirror 17 has reached the position where the tele-limit sensor 15a is ON. If it is determined that the mechanism has reached the position (the determination result is YES), then the zoom unit motor driver 24a is instructed in S246 to terminate the drive of the zoom mechanism stepping motor 14a. Then, control is passed to the process in S247. On the other hand, if it is determined that the mechanism has not reached the position (if the determination result is NO), control is returned to S243, and the drive of the zoom mechanism of the electric zoom mirror 17 is continued until the TELE button 34 is once released or the tele-limit sensor 15a is ON.

In the processes in S244 and S246 in which the drive of the zoom mechanism is terminated, the current zoom position address at the time of the termination of the drive is calculated based on the difference between the zoom position address before starting the drive and the zoom position address corresponding to the drive of the zoom mechanism stepping motor 14a, and the calculation result is stored in the RAM 23.

In S247, the AS set value is calculated from the zoom position address when the drive of the zoom mechanism is terminated, and it is determined whether or not the calculated AS set value is different from the current AS position address. If they match each other (if the determination result is NO), control is returned to the process in Fig. 11B (that is, the process shown in Fig. 10). On the other hand, if they are different (if the determination result is YES), then the AS mechanism position specification driving process, that is, the AS unit motor driver 24c is instructed in S248 to start driving the AS mechanism stepping motor 14c in the direction of the AS position address approaching the AS set value. When the current AS position address matches the AS set value, the AS mechanism position specification driving process is terminated in S249, and then control is returned to the process shown in Fig. 11B (that is, the process shown in Fig. 10).

Described above is the TELE button process.

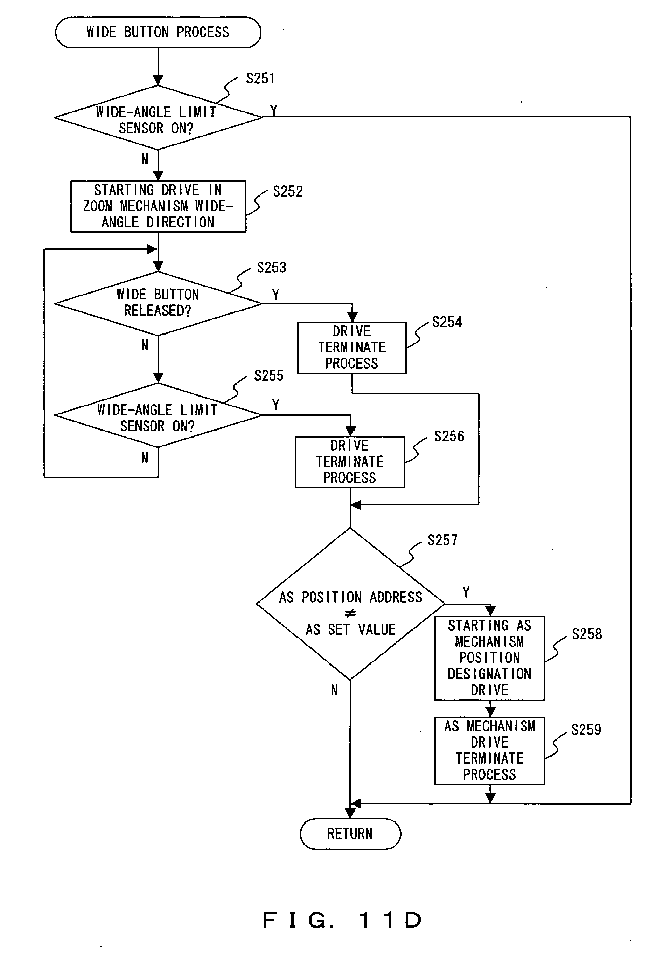

Back in Fig. 11B, if it is determined in the determining process in S235 that the TELE button 34 has not been pressed (if the determination result is NO), it is determined in S237 whether or not the WIDE button 35 has been pressed. If it is determined that the WIDE button 35 has been pressed (if the determination result is YES), the WIDE button process is performed in S238, and then control is returned to the process shown in Fig. 10. The details of the WIDE button process according to the present embodiment are shown in Fig. 11D.

In the flowchart shown in Fig. 11D, it is first determined in S251 whether or not the zoom mechanism of the electric zoom mirror 17 is placed in the position where the wide-angle limit sensor 15b is ON. If it is determined that the mechanism is placed in the position (if the determination result is YES), the WIDE button process is terminated and control is returned to the process in Fig. 11B (that is, the process shown in Fig. 10). On the other hand, if it is determined that the mechanism has not reached the position (if the determination result is NO), the zoom unit motor driver 24a is instructed in S252 to drive the zoom mechanism stepping motor 14a to start movement of the zoom mechanism in the wide-angle direction.

Then, in S253, it is determined whether or not the WIDE button 35 has been released (whether or not the pressed state has been stopped). If it is determined that the WIDE button 35 has been released (if the determination result is YES), the zoom unit motor driver 24a is instructed in S254 to terminate the drive of the zoom mechanism stepping motor 14a, and then control is passed to the process in S257.

If it is determined in S253 that the WIDE button 35 has not been released (if the pressed state is continued) (if the determination result is NO), then it is determined in S255 whether or not the zoom mechanism of the electric zoom mirror 17 has reached the position where the wide-angle limit sensor 15b is ON. If it is determined that the mechanism has reached the position (if the determination result is YES), then the zoom unit motor driver 24a is instructed in S256 to terminate the drive of the zoom mechanism stepping motor 14a, and control is passed to the process in S257. On the other hand, if it is determined that the mechanism has not reached the position (if the determination result is NO), control is returned to S253, and the drive of the zoom mechanism of the electric zoom mirror 17 is continued until the WIDE button 35 is once released or the wide-angle limit sensor 15b is ON.

In the processes in S254 and S256 in which the drive of the zoom mechanism is terminated, the current zoom position address at the time of the termination of the drive is calculated based on the difference between the zoom position address before starting the drive and the zoom position address corresponding to the drive of the zoom mechanism stepping motor 14a, and the calculation result is stored in the RAM 23.

In S257, the AS set value is calculated from the zoom position address at the termination of the drive of the zoom mechanism, and it is determined whether or not the calculated AS set value is different from the current AS position address. If they match each other (if the determination result is NO), control is returned to the process in Fig. 11B (that is, the process shown in Fig. 10). On the other hand, if they are different (if the determination result is YES), then the AS mechanism position specification driving process, that is, the AS unit motor driver 24c is instructed in S258 to start driving the AS mechanism stepping motor 14c in the direction of the AS position address approaching the AS set value. When the current AS position address matches the AS set value, the AS mechanism position specification driving process is terminated in S259, and then control is returned to the process shown in Fig. 11B (that is, the process shown in Fig. 10).

Described above is the WIDE button process.

Back to Fig. 11B, if it is determined in the determining process in S237 that the WIDE button 35 has not been pressed (if the determination result is NO), control is returned to the process shown in Fig. 10.

Described above is the process content of the button process shown in Fig. 11B.

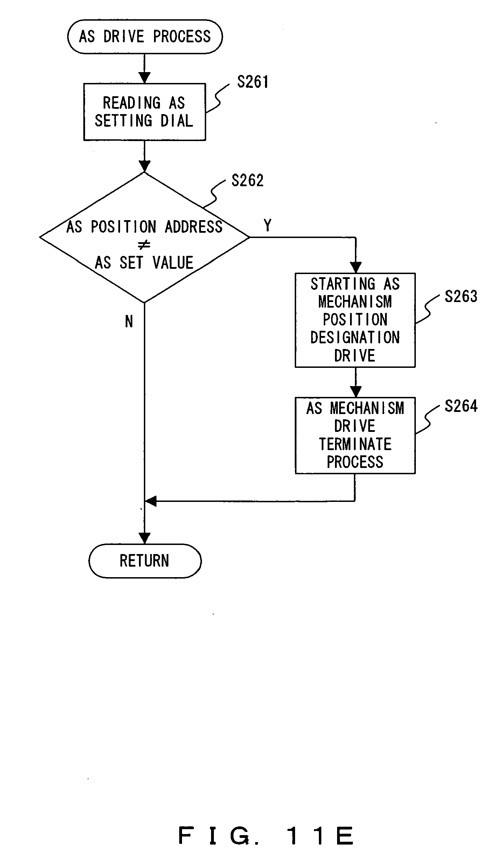

Back to Fig. 10, if it is determined in the determining process in S210 that any one of the above-mentioned buttons in the operation input unit 3 has not been pressed (if the determination result is NO), it is determined in S212 whether or not the AS setting dial 37 has been operated. If it is determined that the AS setting dial 37 has been operated (if the determination result is YES), then the AS drive process is performed in S213, and then control is returned to S206. The details of the AS drive process are shown in Fig. 11E.

In the flowchart shown in Fig. 11E, first in S261, the process of reading a set value o the AS setting dial 37 is performed. In this process, the set value of the AS setting dial 37 and the current zoom position address are referred to, and an AS set value is calculated from the type of the objective lens 13 determined based on the set value of the DIPSW 26 read in the process in S202 shown in Fig. 10.

In S262, it is determined whether or not the calculated AS set value is different from the current AS position address. If they match each other (if the determination result is NO), control is returned to the process in Fig. 10. On the other hand, if they are different (if the determination result is YES), then the AS mechanism position specification driving process, that is, the AS unit motor driver 24c is instructed in S263 to start driving the AS mechanism stepping motor 14c in the direction of the AS position address approaching the AS set value. When the current AS position address matches the AS set value, the AS mechanism position specification driving process is terminated in S264, and then control is returned to the process shown in Fig. 10.

Described above is the AS drive process of the AS mechanism.

Back to Fig. 10, if it is determined in the determining process in S212 that the AS setting dial 37 has not been operated, then it is determined in S214 whether or not the rough/micro motion switch button 36 has been pressed and the state has been changed. If it is determined that the state has been changed (if the determination result is YES), then the process on the rough/micro motion switch button 36 is performed in S215. Then, control is returned to S206, and the above-mentioned processes are repeated. The details of the process in S215 are similar to the process in S205, that is, the process shown in Fig. 5A. Therefore, the explanation about the process is omitted here.

If it is determined in the determining process in S214 that the state has not been changed (if the determination result is NO), then control is returned to S206, and the above-mentioned processes are repeated.

By the above-mentioned processes performed by the microcomputer 21 shown in Fig. 8, the controller 2 controls the microscope apparatus shown in Fig. 7.

As described above, according to the present embodiment, in the microscope apparatus shown in Fig. 7 having the electric focusing mechanism 10, the zoom scaling mechanism of the electric zoom mirror 17, and an electric AS mechanism, the driving speed of the electric focusing mechanism 10 is determined based on the value of the focusing mechanism speed weight dial 31 set depending on the magnification of the objective lens 13 combined with the zoom scaling mechanism, the zoom magnification depending on the zoom scaling mechanism, and the value of the AS setting dial 37 by which the AS aperture gauge is set as an AS aperture rate depending on the zoom scaling mechanism and the objective lens 13. Thus, according to the present embodiment, when the test sample S is observed with the scale-up factor changed, the AS aperture gauge can be controlled into an appropriate aperture rate by any scale-up factor, and the operation of the focusing mechanism can be performed equally by any scale-up factor, thereby reducing the load of the user in the AS operation and the focusing operation.

In the present embodiment, for the driving speed of the electric focusing mechanism 10, the reference magnification of an objective lens and the focusing speed for each zoom magnification are set in advance, and the set value is multiplied by a focusing speed weight coefficient Kf1 and the above-mentioned {Ks x 1 / (AS aperture rate)}. Otherwise, a pseudo NA of an optical observation system and magnification value information can be assigned in advance to the value of the focusing mechanism speed weight dial 31, the depth of focus can be calculated based on the composite NA' obtained by adding the above-mentioned AS aperture rate to the composite NA and a composite magnification value calculated by a combination of the pseudo value and each zoom magnification, and the constant multiple can be used as the driving speed of the electric focusing mechanism 10.

In the present embodiment, it is assumed that the AS set value for the zoom scaling of a zoom scaling mechanism is a constant value in a specific range of the zoom scaling, a table indicating the correspondence between the zoom scaling and the AS set value is prepared in advance and stored in the ROM 22, and the microcomputer 21 can obtain the AS set value for the zoom scaling of the zoom scaling mechanism by referring to the table.

Also in the present embodiment, the microcomputer 21 obtains the type of the objective lens 13 from the setting of the DIPSW 26 of the controller 2. Otherwise, the microcomputer 21 can also obtain the type of the objective lens 13 by including a detection unit for detecting the type of the objective lens 13 in the electric zoom mirror 17, and receiving the detection result output from the detection unit.

Furthermore, in the present embodiment, for the driving speed of the electric focusing mechanism 10, the entire zoom magnification range by the zoom mechanism of the electric zoom mirror 17 is divided into seven ranges and set as shown by the table shown in Fig. 12. Otherwise, an approximation equation can be obtained to acquire a continuous value as a function having a zoom position address value as an argument, and the driving speed of the electric focusing mechanism 10 can be calculated by performing a calculation by the equation.

In the present embodiment, an electric zoom mechanism (electric zoom mirror 17) is used as means for zoom scaling. Otherwise, the manual zoom mechanism and the zoom position sensing unit (for example, a unit for connecting a variable resistor to a zoom operation handle to detect the zoom position depending on the change of the variable resistor, or measure the zoom lens position using a linear sensor, etc.) can be provided for the microscope apparatus shown in Fig. 7, thereby obtain the above-mentioned effect.

Additionally, in the present embodiment, the operation input unit 3 is a single operation unit. Otherwise, for example, a stand or a column of a microscope body, or an operation unit such as a button, a dial, etc. can be arranged for the zoom mechanism.

In the present embodiment, a reference objective lens magnification of the focusing mechanism driving speed and the focusing speed for each zoom magnification are set in advance. Otherwise, it can be arbitrarily set from the PC 8, etc. connected from an external interface of the controller 2 through the cable 7.

Furthermore, in the present embodiment, the rough motion focusing speed of the driving speed of the electric focusing mechanism 10 is defined as a constant multiple of the micromotion focusing speed. Otherwise, it can be fixed to a predetermined high speed.

In the present embodiment, the focusing mechanism speed weight dial 31 is configured using a variable resistor. Otherwise, it also can be configured using a rotary DIP switch.

[Embodiment 3]

Described below is the embodiment 3 according to the present invention.

The feature of the present embodiment resides in that the operation of instructing the operation input unit 3 connected to the controller 2 to drive the focusing mechanism is performed by a JOG encoder, not by a button.

In the present embodiment, a component similar to that according to the embodiment 1 or 2 is assigned the same reference numeral, and the detailed explanation is omitted here. The entire configuration of the microscope apparatus according to the present embodiment is similar to that according to the embodiment 2 shown in Fig. 7, and the explanation is omitted here.

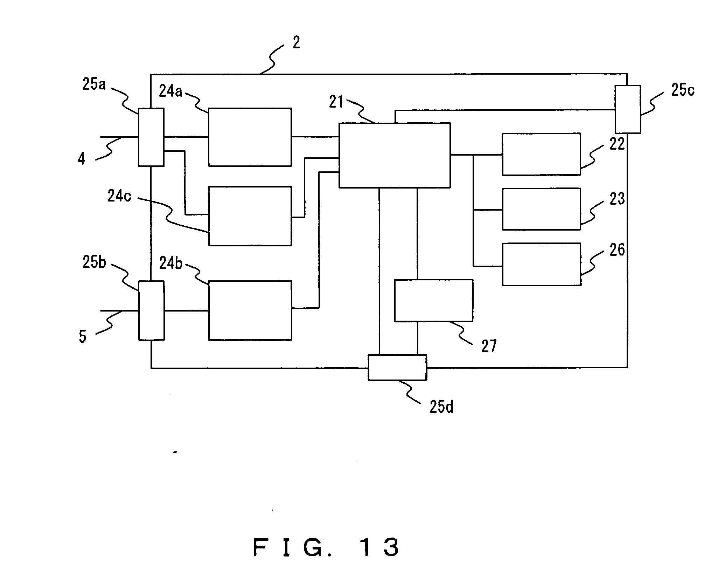

Fig. 13 shows the rough configuration of the controller 2.

In the controller 2 shown in Fig. 13, a decoder 27 is connected to the microcomputer 21 in addition to the configuration according to the embodiment 2 shown in Fig. 8, and the decoder 27 is connected further connected to the operation input unit interface connector 25d. Therefore, the microcomputer 21 can recognize the rotation output signal from a JOG encoder 38 (described later) arranged in the operation input unit 3 as a value.

The operation input unit 3 is connected to the microcomputer 21 via the cable 6.

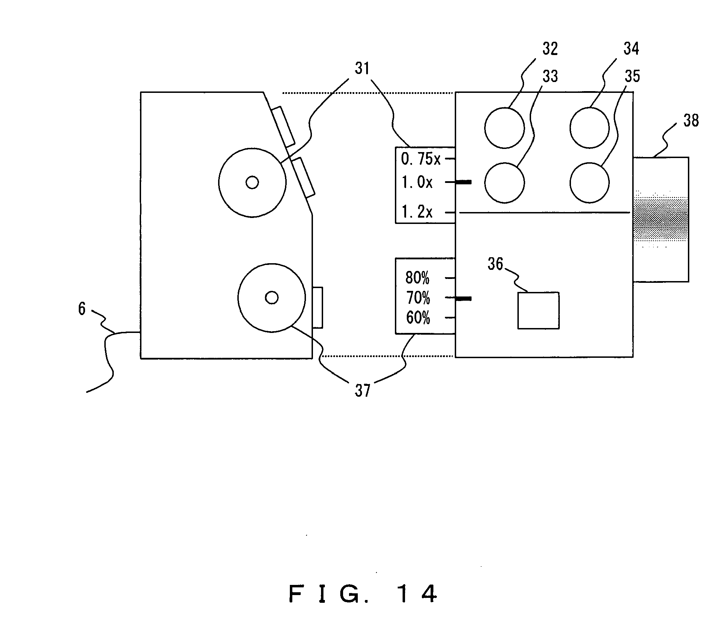

Fig. 14 shows the rough configuration of the operation input unit 3 according to the present embodiment.

The operation input unit 3 shown in Fig. 14 is provided with the JOG encoder 38 in addition to the configuration according to the embodiment 2 shown in Fig. 9. The JOG encoder 38 is configured to direct a focusing unit to be operated by performing a rotating operation.

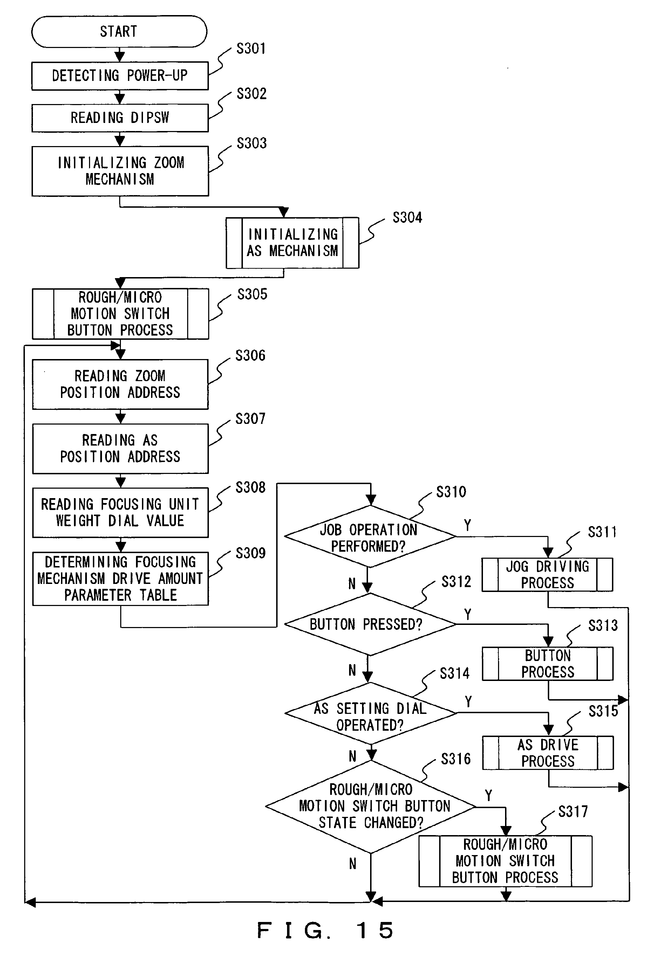

Fig. 15 is explained below. Fig. 15 is a flowchart of the process contents of the control process of the microscope apparatus shown in Fig. 7 performed by the microcomputer 21 of the controller 2 shown in Fig. 8. The control process is realized by the microcomputer 21 executing the control program stored in the ROM 22.

The processes in S301 through S308 shown in Fig. 15 are similar to those in S201 through S208 in the control process according to the embodiment 2 shown in Fig. 10. Therefore, the detailed explanation of these processes is omitted here.

In S309, the drive amount parameter for driving the electric focusing mechanism 10 based on the above-mentioned values is determined. The method of determining the drive amount parameter is explained below.

In the present embodiment, when the JOG encoder 38 makes one turn, the decoder 27 generates signals of 1000 pulses, and the microcomputer 21 can detect the number of pulses of the signal. In the process in S309, the amount of drive of the electric focusing mechanism 10 for the amount of the operation of the JOG encoder 38 is determined.

In the present embodiment, the amount of drive of the electric focusing mechanism 10 for the operation of making one turn of the JOG encoder 38 is determined based on the depth of focus of an optical observation system.

The depth of focus is determined by the numeral aperture (NA) and a magnification Ma of the optical observation system. The magnification Ma of the optical observation system is represented by the product of the magnification Mo of the objective lens 13 and the zoom magnification Mz of the electric zoom mirror 17, that is,

$$Ma = Mo \times Mz \ \dots \ (6)$$

The NA of the optical observation system is determined based on the NA of the objective lens 13, the zoom scaling of the electric zoom mirror 17, and the AS aperture gauge of the AS mechanism. The larger the AS aperture gauge is, the smaller the NA value is.

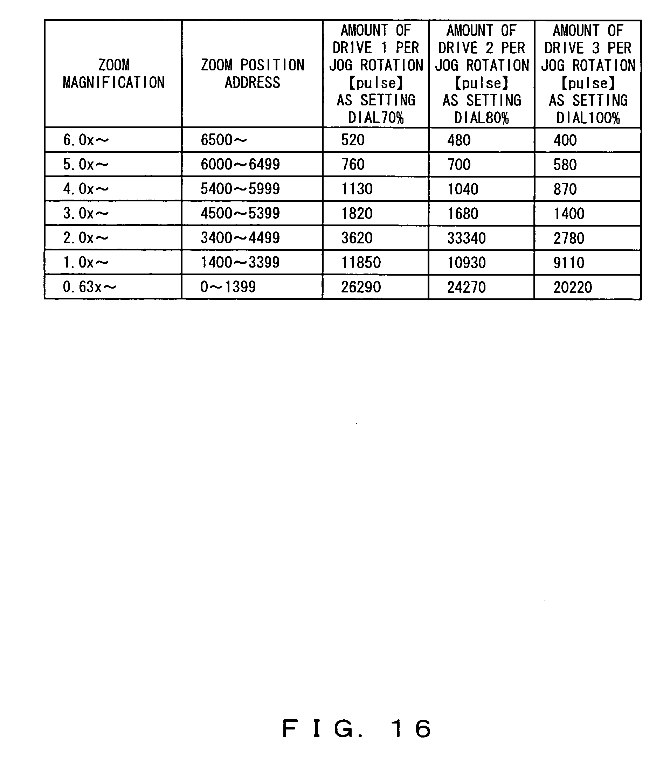

Fig. 16 is a table showing an example of the representative value of the driving speed of the electric focusing mechanism 10 according to the present embodiment. In this example, the entire movable range for zoom of the zoom mechanism is divided into seven ranges depending on the zoom magnification, and the driving speed parameter of the electric focusing mechanism 10 is determined for each range.

The unit of the driving speed in the table shown in Fig. 16 is expressed by the number of pulses of a drive signal provided for the focusing mechanism stepping motor 14b. The larger the value is, the larger amount of drive for the number of rotations of the JOG encoder 38 is. The data forming the table is stored in the ROM 22 in advance. The value of the table indicates the focusing speed in the micromotion (low speed mode), and the focusing speed in the rough motion (high speed mode) is assumed to be represented by multiplying a focusing speed in the micromotion by a constant multiple.

The depth of focus is inversely proportional to the second power of the magnification Mo of the objective lens 13 when the objective lens 13 is exchanged with the zoom magnification determined by the electric zoom mirror 17 fixed. Then, the focusing speed weight coefficient Kf2 is defined as follows.

$$Kf2 = n/(Mo)^2 \ \dots \dots \ (7)$$

where n is a constant.

When the AS aperture gauge is changed with the magnification of the optical observation system fixed, the depth of focus changes substantially proportional to the rate (hereinafter referred to as an "AS aperture rate") of the AS aperture gauge relative to the above-mentioned iris gauge. When the proportional coefficient is Ks, the depth of focus is expressed by the following equation.

$$\text{Depth of Focus} = Ks \times \{1 \, / \, (\text{AS aperture rate})\} \times (\text{depth of focus at AS aperture}$$

$$\text{rate of } 100\%) + b \, \ldots\ldots \, (8)$$

where b is a constant.

The magnification Mo of the reference objective lens 13 and the amount of focusing drive for each zoom magnification (in this example, based on the column of the "focusing speed 3" in Fig. 16) are set in advance, and are multiplied by the value Kf2 obtained by the equation (7) above and the above-mentioned {Ks x 1 / (AS aperture rate)}, thereby calculating the focusing driving speed used when the magnification of the objective lens 13 is changed from the reference magnification and when the AS aperture rate is changed.

In the present embodiment, by substituting the value read by the focusing mechanism speed weight dial 31 for the equation (7) above as the value of Mo, an arbitrary weight is set for the amount of focusing drive, and the amount of focusing drive can be controlled. The focusing mechanism speed weight dial 31 is configured not by a discrete value such as "0.5x", "1.0x", or "1.5x", but by a continuously variable. The table shown in Fig. 16 indicates the amount of focusing drive when the focusing mechanism speed weight dial 31 is set to "1.0x".

The amount of micromotion focusing drive and its constant multiple as the amount of rough motion focusing drive calculated as described above can be assigned a higher limit value and a lower limit value. When a calculation result exceeds the limit values, the limit values are set as an amount of focusing drive.

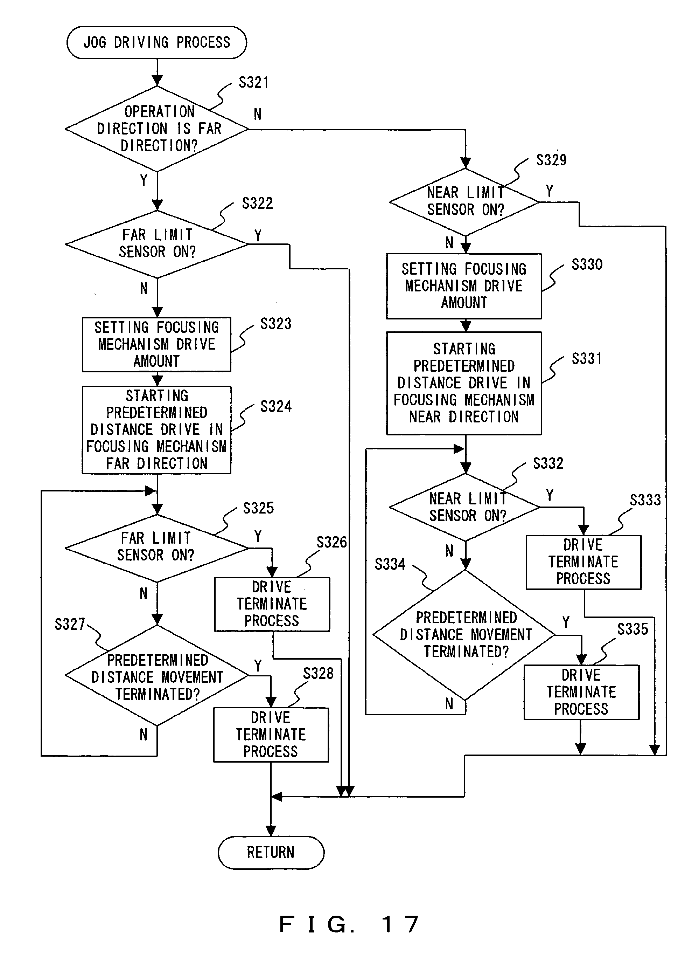

Back to Fig. 15, it is determined in S310 according to the signal output from the decoder 27 whether or not a rotating operation on the JOG encoder 38 of the operation input unit 3 has been performed. If it is determined that the rotating operation has been performed (if the determination result is YES), the JOG driving process is performed in S311, and then control is returned to S306. The details of the JOG driving process are shown in Fig. 17.

The flowchart shown in Fig. 17 is explained below. First, in S321, the data obtained by the decoder 27 in the controller 2 decoding the output of the JOG encoder 38 is read. Based on the data, the amount of operation and the operation direction of the JOG encoder 38 are determined, and it is determined whether or not the operation direction refers to the far direction of the electric focusing mechanism 10. If the operation direction of the JOG encoder 38 refers to the far direction (if the determination result is YES), control is passed to S322. If it refers to the near direction (if the determination result is NO), then control is passed to S329.

In S322, it is determined whether or not the electric focusing mechanism 10 is placed in the position where the far limit sensor 15c is ON. If it is determined that the mechanism is placed in the position (if the determination result is YES), the JOG driving process is terminated, and control is returned to the process shown in Fig. 15. If it is determined that the mechanism is not placed in the position (if the determination result is NO), the process of obtaining and setting the amount of flexible disk and the focusing speed of the electric focusing mechanism 10 is performed in S323 based on the amount of the drive of the electric focusing mechanism 10 for the operation of making one turn off the JOG encoder 38 determined in the process in S309 shown in Fig. 15 and the state (rough motion or micromotion) of the selection of the speed of the electric focusing mechanism 10 recognized in the process in S305 shown in Fig. 15.

In S324, the focusing unit motor driver 24b is instructed to drive the focusing mechanism stepping motor 14b, and start the movement in the far direction of the electric focusing mechanism 10 at the driving speed set in the process in the preceding step.

In S325, it is determined whether or not the electric focusing mechanism 10 has reached the position where the far limit sensor 15c is ON. If it is determined that the mechanism has reached the position (if the determination result is YES), the focusing unit motor driver 24b is instructed in S326 to terminate the drive of the focusing mechanism stepping motor 14b, then the JOG driving process is terminated, and control is returned to the process shown in Fig. 15.

If it is determined in the determining process in S325 that the mechanism has not reached the position where the far limit sensor 15c is ON (if the determination result is NO), then it is determined in S327 whether or not the movement of the electric focusing mechanism 10 by the distance corresponding to the amount of focusing drive set in the process in S323 has been completed, and if it is determined that the movement by the distance has been completed (if the determination result is YES), then the focusing unit motor driver 24b is instructed in S328 to terminate the drive of the focusing mechanism stepping motor 14b, then the JOG driving process is terminated, and control is returned to the process in Fig. 15.

In S329, it is determined whether or not the electric focusing mechanism 10 is placed in the position where the near limit sensor 15d is ON. If it is determined that the mechanism is placed in the position (if the determination result is YES), the JOG driving process is terminated, and control is returned to the process shown in Fig. 15. If it is determined that the mechanism is not placed in the position (if the determination result is NO), the process of obtaining and setting the amount of flexible disk and the focusing speed of the electric focusing mechanism 10 is performed in S330 based on the amount of the drive of the electric focusing mechanism 10 for the operation of making one turn off the JOG encoder 38 determined in the process in S309 shown in Fig. 15 and the state (rough motion or micromotion) of the selection of the speed of the electric focusing mechanism 10 recognized in the process in S305 shown in Fig. 15.

In S331, the focusing unit motor driver 24b is instructed to drive the focusing mechanism stepping motor 14b, and start the movement in the near direction of the electric focusing mechanism 10 at the driving speed set in the process in the preceding step.

In S332, it is determined whether or not the electric focusing mechanism 10 has reached the position where the near limit sensor 15d is ON. If it is determined that the mechanism has reached the position (if the determination result is YES), the focusing unit motor driver 24b is instructed in S333 to terminate the drive of the focusing mechanism stepping motor 14b, then the JOG driving process is terminated, and control is returned to the process shown in Fig. 15.

If it is determined in the determining process in S332 that the mechanism has not reached the position where the near limit sensor 15d is ON (if the determination result is NO), then it is determined in S334 whether or not the movement of the electric focusing mechanism 10 by the distance corresponding to the amount of focusing drive set in the process in S330 has been completed, and if it is determined that the movement by the distance has been completed (if the determination result is YES), then the focusing unit motor driver 24b is instructed in S335 to terminate the drive of the focusing mechanism stepping motor 14b, then the JOG driving process is terminated, and control is returned to the process in Fig. 15.

Described above is the JOG driving process.

Back to Fig. 15, if it is determined in the determining process in S310 that the rotating operation of the JOG encoder 38 of the operation input unit 3 has not been performed (if the determination result is NO), the processes in and after S312 are performed. The processes from S312 to S317 are similar to those from S210 to S215 in the control process according to the embodiment 2, the detailed explanation of these processes is omitted here.

By the above-mentioned processes performed by the microcomputer 21 shown in Fig. 13, the controller 2 controls the microscope apparatus shown in Fig. 7.

As described above, according to the present embodiment, in the microscope apparatus shown in Fig. 7 having the electric focusing mechanism 10, the zoom scaling mechanism of the electric zoom mirror 17, and an electric AS mechanism, the driving speed of the electric focusing mechanism 10 and the amount of drive of the electric focusing mechanism 10 per rotation of the JOG encoder 38 are determined based on the value of the focusing mechanism speed weight dial 31 set depending on the magnification of the objective lens 13 combined with the zoom scaling mechanism, the zoom magnification depending on the zoom scaling mechanism, and the value of the AS setting dial 37 by which the AS aperture gauge is set as an AS aperture rate depending on the zoom scaling mechanism and the objective lens 13. Thus, according to the present embodiment, when the test sample S is observed with the scale-up factor changed, the AS aperture gauge can be controlled into an appropriate aperture rate by any scale-up factor, and the operation of the focusing mechanism can be performed equally without depending on the operation for the FAR button 32 and the NEAR button 33 or the operation for the JOG encoder 38, thereby reducing the load of the user in the AS operation and the focusing operation.

In the present embodiment, for the amount of drive of the electric focusing mechanism 10 per rotation of the JOG encoder 38, the reference magnification of an objective lens and the focusing speed for each zoom magnification are set in advance, and the value is multiplied by a focusing drive amount weight coefficient Kf2 and the above-mentioned {Ks x 1 / (AS aperture rate)}. Otherwise, a pseudo NA of an optical observation system and magnification value information can be assigned in advance to the value of the focusing mechanism speed weight dial 31, the depth of focus can be calculated based on the composite NA' obtained by adding the above-mentioned AS aperture rate to the composite NA and a composite magnification value calculated by a combination of the pseudo value and each zoom magnification, and the constant multiple can be used as the amount of drive of the electric focusing mechanism 10 per rotation of the JOG encoder 38.

In the present embodiment, it is assumed that the AS set value for the zoom scaling of a zoom scaling mechanism is a constant value in a specific range of the zoom scaling, a table indicating the correspondence between the zoom scaling and the AS set value is prepared in advance and stored in the ROM 22, and the microcomputer 21 can obtain the AS set value for the zoom scaling of the zoom scaling mechanism by referring to the table.

Also in the present embodiment, the microcomputer 21 obtains the type of the objective lens 13 from the setting of the DIPSW 26 of the controller 2. Otherwise, the microcomputer 21 can also obtain the type of the objective lens 13 by including a detection unit for detecting the type of the objective lens 13 in the electric zoom mirror 17, and receiving the detection result output from the detection unit.

In the present embodiment, for the amount of drive of the electric focusing mechanism 10 per rotation of the JOG encoder 38, the entire zoom magnification range by the zoom mechanism of the electric zoom mirror 17 is divided into seven ranges and set as shown by the table shown in Fig. 12. Otherwise, an approximation equation can be obtained to acquire a continuous value as a function having a zoom position address value as an argument, and the driving speed of the electric focusing mechanism 10 can be calculated by performing a calculation by the equation.

In the present embodiment, an electric zoom mechanism (electric zoom mirror 17) is used as means for zoom scaling. Otherwise, the manual zoom mechanism and the zoom position sensing unit (for example, a unit for connecting a variable resistor to a zoom operation handle to detect the zoom position depending on the change of the variable resistor, or measure the zoom lens position using a linear sensor, etc.) can be provided for the microscope apparatus shown in Fig. 7, thereby obtain the above-mentioned effect.

Additionally, in the present embodiment, the operation input unit 3 is a single operation unit. Otherwise, for example, a stand or a column of a microscope body, or an operation unit such as a button, a dial, a JOG encoder 38, etc. can be arranged for the zoom mechanism.

In the present embodiment, a reference objective lens magnification for obtaining the amount of drive of the electric focusing mechanism 10 per rotation of the JOG encoder 38 and the focusing speed for each zoom magnification are set in advance. Otherwise, it can be arbitrarily set from the PC 8, etc. connected from an external interface of the controller 2 through the cable 7.

Furthermore, in the present embodiment, the rough motion focusing speed of the driving speed of the electric focusing mechanism 10 is defined as a constant multiple of the micromotion focusing speed. Otherwise, it can be fixed to a predetermined high speed.

In the present embodiment, the focusing mechanism speed weight dial 31 is configured using a variable resistor. Otherwise, it also can be configured using a rotary DIP switch.

The configuration of the controller 2 in each embodiment explained above is common to standard computers, and the computer can function as the controller 2 to control the microscope apparatus shown in Figs. 1 and 7. To attain this, a control program for directing the CPU (central processing unit) of the computer to perform various control processes that have been performed by the microcomputer 21 in each embodiment is generated and recorded in a computer-readable recording medium, and the program is read from the recording medium to the computer with the computer electrically connected to the microscope body 1.

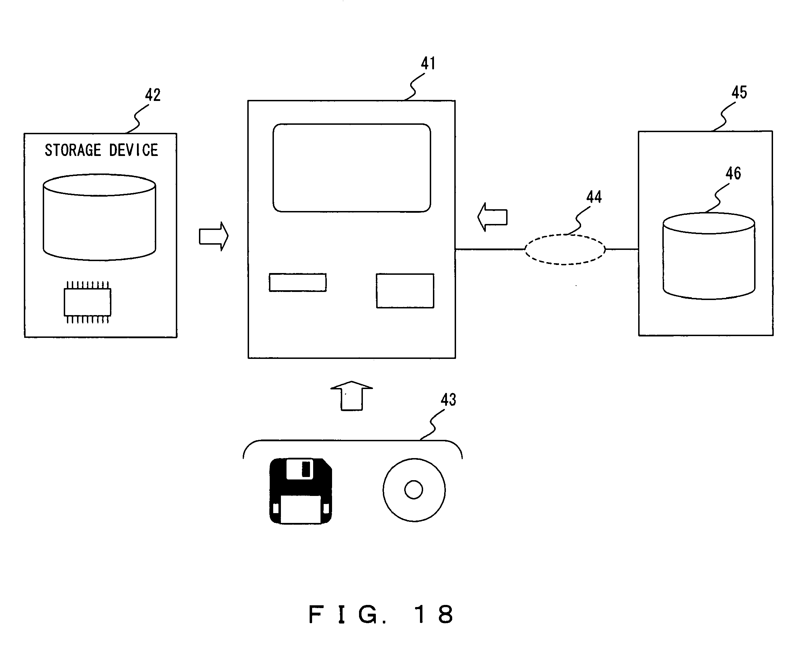

A recording medium capable of reading through the computer the recorded control program can be, as shown in Fig. 18, a storage device 42 such as a built-in or external accessory unit of a computer 41, for example, ROM, a hard disk device, etc., a portable recording medium 43, etc. capable of reading a control program recorded by inserting into a medium drive unit such as a flexible disk, a MO (magneto optical disk), CD-ROM, DVD-ROM, etc.

These recording media can be a storage device 46 provided by a program server 45 connected to the computer 41. In this case, a transmission signal obtained by modulating a carrier wave using data signal representing a control program is transmitted from the program server 45 to the computer 41 through the communication circuit 44 as a transmission medium, and the computer 41 can demodulate the received transmission signal and regenerate the control program, thereby allowing the CPU of the computer 41 to execute the program.

Furthermore, the present invention is not limited to the above-mentioned embodiments, but can be realized as a number of improvements and variations within the gist of the present invention.

**Claims**

1. A microscope apparatus, comprising:

   a drive unit (14b) driving a focusing mechanism which adjusts a distance between a sample and an objective lens, and changing the distance; and
   a drive control unit (2) controlling a driving speed based on a depth of focus of an optical observation system.

2. The microscope apparatus according to claim 1, further comprising
   a scaling unit (17) changing an observation magnification for the sample, wherein
   the drive control unit (2) controls the speed based on the magnification of the objective lens and the magnification of the scaling unit.

3. The microscope apparatus according to claim 2, further comprising
   a storage unit (22) storing information about a relationship between the speed and the magnification of the scaling unit, wherein
   the drive control unit (2) controls the speed associated with the magnification of the scaling unit in the information by weighting the speed based on the magnification of the objective lens.

4. The microscope apparatus according to claim 2, wherein
   the drive control unit (2) controls the speed based on an aperture gauge of an aperture stop provided in the optical observation system of the microscope apparatus.

5. The microscope apparatus according to claim 4, further comprising

a storage unit (22) storing information about a relationship between the speed and the magnification of the scaling unit and information about a relationship between the speed and the aperture gauge of the aperture stop, wherein the drive control unit (2) controls the speed associated with the magnification of the scaling unit and the aperture gauge of the aperture stop in the information by weighting the speed based on the magnification of the objective lens.

6. The microscope apparatus according to claim 1, wherein,
the driving speed includes definition of a micromotion speed and a rough motion speed; and
the drive control unit (2) sets the micromotion speed based on the depth of focus of an optical observation system, and sets the rough motion speed as a constant multiple of the micromotion speed.

7. The microscope apparatus, according to claim 1, further comprising
a drive instruction acquisition unit (3) acquiring an instruction to drive the focusing mechanism by an operation, wherein
the drive control unit (2) controls an amount of drive of the focusing mechanism relative to an amount of operation on the drive instruction acquisition unit based on the depth of focus.

8. A microscope control method, comprising:

determining a driving speed, when a distance between a sample as an observation target in the microscope and an objective lens of the microscope is changed by driving a focusing mechanism for adjusting the distance, based on a depth of focus of an optical observation system of the microscope; and
driving the focusing mechanism, controlling a drive unit for changing the distance, and obtaining a determined driving speed.

9. A computer-readable recording medium storing a program used to direct a computer to control a microscope the process comprising
a process of determining a driving speed, when a distance between a sample as an observation target in the microscope and an objective lens of the microscope is changed by driving a focusing mechanism for adjusting the distance, based on a depth of focus of an optical observation system of the microscope; and
a process of driving the focusing mechanism, controlling a drive unit for changing the distance, and obtaining a determined driving speed.

FIG. 1

FIG. 2

F I G. 3

START

DETECTING POWER-UP — S101

INITIALIZING ZOOM MECHANISM — S102

ROUGH/MICRO MOTION SWITCH BUTTON PROCESS — S103

READING ZOOM POSITION ADDRESS — S104

READING FOCUSING UNIT SPEED WEIGHT DIAL VALUE — S105

DETERMINING FOCUSING MECHANISM SPEED PARAMETER TABLE — S106

BUTTON PRESSED? — S107

FAR BUTTON? — S108 — Y → FAR BUTTON PROCESS — S109

NEAR BUTTON? — S110 — Y → NEAR BUTTON PROCESS — S111

TELE BUTTON? — S112 — Y → TELE BUTTON PROCESS — S113

WIDE BUTTON? — S114 — Y → WIDE BUTTON PROCESS — S115

ROUGH/MICRO MOTION SWITCH BUTTON STATE CHANGED? — S116

ROUGH/MICRO MOTION SWITCH BUTTON PROCESS — S117

F I G. 4

```
            ┌─────────────────────────────────┐
            │  MICRO/ROUGH MOTION SWITCH       │
            │      BUTTON PROCESS              │
            └─────────────────────────────────┘
                         │
                         │        S121
                         ▼       ╱
                    ╱◇────────◇╲         Y
                   ╱             ╲──────────────────────┐
                  ◇  BUTTON ON?   ◇                     │
                   ╲             ╱                      ▼
                    ╲◇────────◇╱              ┌──────────────────────┐
                         │  N                 │  FOCUSING MECHANISM  │  S122
                         │                    │     ROUGH MOTION     │ ╱
                         ▼                    │   SETTING PROCESS    │
            ┌──────────────────────┐         └──────────────────────┘
            │  FOCUSING MECHANISM  │  S123             │
            │     MICRO MOTION     │ ╱                 │
            │   SETTING PROCESS    │                   │
            └──────────────────────┘                   │
                         │◄───────────────────────────┘
                         │
                         ▼
            ┌─────────────────────────┐
            │         RETURN          │
            └─────────────────────────┘
```

F I G.  5 A

```
        ┌─────────────────────┐
        │  FAR BUTTON PROCESS │
        └─────────────────────┘
                   │
                   │         S131
                   ▼
              ╱─────────╲          Y
             ╱ FAR LIMIT ╲─────────────────────────────────────┐
             ╲ SENSOR ON? ╱                                     │
              ╲─────────╱                                       │
                   │ N                                          │
                   ▼                                            │
        ┌─────────────────────┐   S132                          │
        │  SETTING FOCUSING   │                                 │
        │ MECHANISM DRIVING   │                                 │
        │       SPEED         │                                 │
        └─────────────────────┘                                 │
                   │                                            │
                   ▼                                            │
        ┌─────────────────────┐   S133                          │
        │   STARTING DRIVE    │                                 │
        │ IN FOCUSING MECHANISM│                                │
        │    FAR DIRECTION    │                                 │
        └─────────────────────┘                                 │
         ┌────────▶ │                                           │
         │          │         S134                              │
         │          ▼                                          │
         │     ╱─────────╲         Y                            │
         │    ╱FAR BUTTON  ╲──────────────┐                     │
         │    ╲ RELEASED?  ╱              │                     │
         │     ╲─────────╱                ▼                     │
         │          │ N          ┌─────────────┐  S135          │
         │          │            │    DRIVE    │               │
         │          │            │  TERMINATE  │               │
         │          ▼            │   PROCESS   │               │
         │          │   S136     └─────────────┘               │
         │     ╱─────────╲              │                       │
         │    ╱ FAR LIMIT ╲      Y      │                       │
         │    ╲ SENSOR ON? ╱────────────┼───────────────────────┤
         │     ╲─────────╱              │                       │
         │          │ N                 │                       │
         └──────────┘                   │                       │
                                        ▼                       │
                              ┌─────────────┐  S137             │
                              │    DRIVE    │                   │
                              │  TERMINATE  │                   │
                              │   PROCESS   │                   │
                              └─────────────┘                   │
                                        │                       │
                                        ▼◀──────────────────────┘
                                 ┌───────────┐
                                 │  RETURN   │
                                 └───────────┘
```

# F I G.  5 B

```
        ┌─────────────────────────┐
        │   NEAR BUTTON PROCESS   │
        └─────────────────────────┘
                    │
                    ▼         S141
              ╱─────────────╲        Y
             ╱  NEAR LIMIT   ╲─────────────────────────────┐
             ╲  SENSOR ON?   ╱                              │
              ╲─────────────╱                               │
                    │ N                                     │
                    ▼          S142                         │
        ┌─────────────────────────┐                        │
        │   SETTING FOCUSING      │                        │
        │   MECHANISM DRIVING     │                        │
        │        SPEED            │                        │
        └─────────────────────────┘                        │
                    │                                       │
                    ▼          S143                         │
        ┌─────────────────────────┐                        │
        │   STARTING DRIVE        │                        │
        │ IN FOCUSING MECHANISM   │                        │
        │    NEAR DIRECTION       │                        │
        └─────────────────────────┘                        │
         ┌──────────►│                                      │
         │           ▼          S144                        │
         │     ╱─────────────╲        Y                     │
         │    ╱ NEAR BUTTON   ╲──────────────┐              │
         │    ╲  RELEASED?    ╱               │              │
         │     ╲─────────────╱                ▼   S145       │
         │           │ N             ┌──────────────┐       │
         │           │               │    DRIVE     │       │
         │           ▼    S146       │  TERMINATE   │       │
         │     ╱─────────────╲       │   PROCESS    │       │
         │    ╱  NEAR LIMIT   ╲  Y   └──────────────┘       │
         │    ╲  SENSOR ON?   ╱───────┐        │            │
         │     ╲─────────────╱        │        └────────────┤
         │           │ N              ▼   S147              │
         └───────────┘       ┌──────────────┐              │
                             │    DRIVE     │              │
                             │  TERMINATE   │◄─────────────┘
                             │   PROCESS    │
                             └──────────────┘
                                     │
                                     ▼
                             ┌──────────────┐
                             │    RETURN    │
                             └──────────────┘
```

# F I G. 5 C

TELE BUTTON PROCESS

S151

TELE-LIMIT
SENSOR ON? — Y

N

STARTING DRIVE IN
ZOOM MECHANISM
TELE DIRECTION — S152

S153

TELE-BUTTON
RELEASED? — Y

N

DRIVE
TERMINATE
PROCESS — S154

S155

TELE LIMIT
SENSOR ON? — Y

N

DRIVE
TERMINATE
PROCESS — S156

RETURN

F I G. 5 D

F I G. 5 E

| ZOOM MAGNIFICATION | ZOOM POSITION ADDRESS | FOCUSING SPEED 1 [pps] | FOCUSING SPEED 2 [pps] | FOCUSING SPEED 3 [pps] |
|---|---|---|---|---|
| 6.0x~ | 6500~ | 7200 | 1800 | 1300 |
| 5.0x~ | 6000~6499 | 10400 | 2600 | 1800 |
| 4.0x~ | 5400~5999 | 15600 | 3900 | 2700 |
| 3.0x~ | 4500~5399 | 25200 | 6300 | 4400 |
| 2.0x~ | 3400~4499 | 50000 | 12500 | 8680 |
| 1.0x~ | 1400~3399 | 164000 | 41000 | 28500 |
| 0.63x~ | 0~1399 | 364000 | 91000 | 63200 |

↑ WEIGHT DIAL 0.5x   ↑ WEIGHT DIAL 1.0x   ↑ WEIGHT DIAL 1.2x

# F I G. 6

F I G. 7

FIG. 8

F I G.  9

```
                    ┌──────────────┐
                    │    START     │
                    └──────┬───────┘
                           │                    S201
            ┌──────────────▼───────────────┐
            │     DETECTING POWER-UP        │
            └──────────────┬───────────────┘
                           │                    S202
            ┌──────────────▼───────────────┐
            │       READING DIPSW           │
            └──────────────┬───────────────┘
                           │                    S203
            ┌──────────────▼───────────────┐
            │  INITIALIZING ZOOM MECHANISM  │
            └──────────────┬───────────────┘
```

F I G. 1 0

```
        ┌─────────────────────┐
        │    AS MECHANISM     │
        │ INITIALIZING PROCESS│
        └─────────────────────┘
                  │
                  ▼
        ┌─────────────────────┐  S221
        │     DRIVING AS      │
        │  MECHANISM ORIGIN·  │
        └─────────────────────┘
                  │
                  ▼
        ┌─────────────────────┐  S222
        │     READING AS      │
        │   SETTING DIAL      │
        └─────────────────────┘
                  │
                  ▼
              S223
         ◇───────────────◇
        ╱ AS POSITION ADDRESS ╲      Y
       ◇        ≠         ◇────────────────────┐
        ╲   AS SET VALUE  ╱                    │
         ◇───────────────◇                     ▼
                  │            ┌─────────────────────┐  S224
                  │            │     STARTING AS     │
                  N            │ MECHANISM POSITION  │
                  │            │ DESIGNATION DRIVE   │
                  │            └─────────────────────┘
                  │                      │
                  │                      ▼
                  │            ┌─────────────────────┐  S225
                  │            │  AS MECHANISM DRIVE │
                  │            │  TERMINATE PROCESS  │
                  │            └─────────────────────┘
                  │                      │
                  ▼◄─────────────────────┘
        ┌─────────────────────┐
        │       RETURN        │
        └─────────────────────┘
```

# F I G.   1 1 A

FIG. 11B

TELE BUTTON PROCESS

S241
TELE-LIMIT
SENSOR ON?
N → START DRIVE IN
ZOOM MECHANISM
TELE DIRECTION   S242

Y →

S243
TELE BUTTON
RELEASED?
Y → DRIVE
TERMINATED
PROCESS   S244

N →

S245
TELE-LIMIT
SENSOR ON?
Y → DRIVE
TERMINATED
PROCESS   S246

N

S247
AS POSITION ADDRESS
≠
AS SET VALUE?
Y → STARTING AS
MECHANISM
POSITION
DESIGNATION
DRIVE   S248

AS MECHANISM
DRIVE
TERMINATE
PROCESS   S249

N

RETURN

F I G.   1 1 C

( WIDE BUTTON PROCESS )

S251

WIDE-ANGLE LIMIT SENSOR ON? — Y

N

STARTING DRIVE IN ZOOM MECHANISM WIDE-ANGLE DIRECTION — S252

WIDE BUTTON RELEASED? — Y — S253

N

DRIVE TERMINATE PROCESS — S254

WIDE-ANGLE LIMIT SENSOR ON? — Y — S255

N

DRIVE TERMINATE PROCESS — S256

AS POSITION ADDRESS ≠ AS SET VALUE — Y — S257

N

STARTING AS MECHANISM POSITION DESIGNATION DRIVE — S258

AS MECHANISM DRIVE TERMINATE PROCESS — S259

( RETURN )

F I G.  1 1 D

```
        ╭─────────────────────╮
        │  AS DRIVE PROCESS    │
        ╰─────────────────────╯
                   │
                   ▼
        ┌─────────────────┐  S261
        │   READING  AS    │
        │  SETTING  DIAL   │
        └─────────────────┘
                   │
                   ▼
              ◇─────────◇  S262
         ╱  AS POSITION ADDRESS ╲         Y
        ◇          ≠             ◇─────────┐
         ╲     AS SET VALUE     ╱          │
              ◇─────────◇                  ▼
                   │            ┌──────────────────┐  S263
                 N │            │   STARTING  AS    │
                   │            │    MECHANISM      │
                   │            │    POSITION       │
                   │            │  DESIGNATION      │
                   │            │     DRIVE         │
                   │            └──────────────────┘
                   │                       │
                   │                       ▼
                   │            ┌──────────────────┐  S264
                   │            │  AS MECHANISM     │
                   │            │    DRIVE          │
                   │            │  TERMINATE        │
                   │            │   PROCESS         │
                   │            └──────────────────┘
                   │                       │
                   │◄──────────────────────┘
                   ▼
        ╭─────────────────────╮
        │      RETURN          │
        ╰─────────────────────╯
```

# F I G.  1 1 E

| ZOOM MAGNIFICATION | ZOOM POSITION ADDRESS | FOCUSING SPEED 1 [pps] AS SETTING DIAL70% | FOCUSING SPEED 2 [pps] AS SETTING DIAL80% | FOCUSING SPEED 3 [pps] AS SETTING DIAL100% |
|---|---|---|---|---|
| 6. 0x~ | 6500~ | 2340 | 2160 | 1800 |
| 5. 0x~ | 6000~6499 | 3380 | 3120 | 2600 |
| 4. 0x~ | 5400~5999 | 5070 | 4680 | 3900 |
| 3. 0x~ | 4500~5399 | 8190 | 7560 | 6300 |
| 2. 0x~ | 3400~4499 | 16250 | 15000 | 12500 |
| 1. 0x~ | 1400~3399 | 53300 | 49200 | 41000 |
| 0. 63x~ | 0~1399 | 118300 | 109200 | 91000 |

F I G.   1 2

F I G .  1 3

F I G. 1 4

F I G.  1 5

| ZOOM MAGNIFICATION | ZOOM POSITION ADDRESS | AMOUNT OF DRIVE 1 PER JOG ROTATION [pulse] AS SETTING DIAL70% | AMOUNT OF DRIVE 2 PER JOG ROTATION [pulse] AS SETTING DIAL80% | AMOUNT OF DRIVE 3 PER JOG ROTATION [pulse] AS SETTING DIAL100% |
|---|---|---|---|---|
| 6.0x~ | 6500~ | 520 | 480 | 400 |
| 5.0x~ | 6000~6499 | 760 | 700 | 580 |
| 4.0x~ | 5400~5999 | 1130 | 1040 | 870 |
| 3.0x~ | 4500~5399 | 1820 | 1680 | 1400 |
| 2.0x~ | 3400~4499 | 3620 | 33340 | 2780 |
| 1.0x~ | 1400~3399 | 11850 | 10930 | 9110 |
| 0.63x~ | 0~1399 | 26290 | 24270 | 20220 |

# F I G. 1 6

F I G. 1 7

STORAGE DEVICE

41

42

43

44

45

46

F I G. 18

EP 1 686 406 A2